# EUROPEAN PATENT APPLICATION

(11) **EP 4 350 505 A1**
(43) Date of publication of application: **10.04.2024**
(21) Application number: 21943998.1
(22) Date of filing: 31.05.2021
(51) Int. Cl.: G06F 8/70

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: NISHIGAKI, Masaki, Kawasaki-shi, Kanagawa 211-8588 (JP)
(74) Representative: Hoffmann Eitle
(86) International application number: PCT/JP2021/020615
(87) International publication number: WO 2022/254487

(57) **Abstract**

The identity of pieces of incompatibility information is determined.

A storage unit (11) stores incompatibility information (13), which is information for searching for a description incompatible with second software from source code using first software and indicates a condition for a keyword of two or more language elements and a positional relationship between the two or more language elements. A processing unit (12) extracts two or more keywords from the incompatibility information (13), generates frequency information (15) based on the appearance frequency of the same keyword, generates order information (17) indicating the appearance order of the two or more keywords estimated from the condition of positional relationship, and based on the degree of similarity between the frequency information (15) and frequency information (16) corresponding to incompatibility information (14) and the degree of similarity between the order information (17) and order information (18) corresponding to the incompatibility information (14), determines the identity of the pieces of incompatibility information (13 and 14).

## Description

### Technical Field

The embodiments discussed herein are related to an information processing program, an information processing method, and an information processing device.

### Background Art

An information processing system may use software provided by a software vendor. As an example of software, middleware such as a database management system (DBMS) is given. The source code of a program executed in the information processing system may be created depending on the specifications of provided software. For example, a program may transmit a request to provided software and call a function of the software, such as transmitting a structured query language (SQL) statement to a DBMS and calling a database operation function.

The information processing system may change software to be used. For example, when a software vendor performs version upgrade, the information processing system may update the software to be used to a new version. Furthermore, for example, the information processing system may switch to the same type of software provided by another software vendor.

However, by changing the software to be used, a failure based on the incompatibility between pieces of software may occur in an existing program. For example, due to a difference in language specifications for describing a request, such as supported language specifications of an SQL statement, an error may occur in transmission of a request from an existing program to new software. Therefore, there is a possibility that changing the software to be used involves correction of the source code.

Note that, a computing machine system has been proposed in which incompatibility of dynamic link libraries of the same type installed in different computing machines is detected by transferring the dynamic link libraries and a failure message between the computing machines. Furthermore, an information disclosure activation system has been proposed in which disclosure information is acquired from a user, a viewing value is calculated from the disclosure information, and a consideration is provided to the user who has provided the disclosure information according to the calculated viewing value. Furthermore, a system migration support apparatus has been proposed in which a correspondence relationship between an application programming interface (API) of an old system and an API of a new system is determined based on the similarity of API names and similarity of value ranges.

### Citation List

### Patent Literature

PTL 1: Japanese Laid-open Patent Publication No. 2001-100998
PTL 2: Japanese Laid-open Patent Publication No. 2011-95856
PTL 3: Japanese Laid-open Patent Publication No. 2012-113536

### Summary of Invention

### Technical Problem

As one method of supporting correction of the source code, a method is conceivable in which a computer saves incompatibility information that defines a feature of a description having a possibility of the occurrence of a failure based on incompatibility, and searches for an incompatible portion from the source code based on the incompatibility information.

However, a feature of an incompatible portion defined in incompatibility information is not limited to a simple feature such as a single keyword, and may be a complicated feature indicating a condition for a combination of two or more language elements. For this reason, such a case may occur that, even when two pieces of incompatibility information include descriptions that are formally different, incompatible portions to be searched for are substantially the same.

On the other hand, in managing a plurality of pieces of incompatibility information, a computer may want to determine the substantial identity between a certain piece of incompatibility information and another piece of incompatibility information. Accordingly, in one aspect, an object of the present disclosure is to determine the identity of pieces of incompatibility information.

### Solution to Problem

According to one aspect, an information processing program that causes a computer to execute the following processing is provided. First incompatibility information, which is information for searching for a description incompatible with second software from source code using first software and indicates a condition for a keyword of two or more language elements and a positional relationship between the two or more language elements, is acquired. Two or more keywords are extracted from the first incompatibility information, first frequency information based on the appearance frequency of the same keyword is generated, and first order information indicating the appearance order of the two or more keywords estimated from the condition of positional relationship is generated. Based on a first degree of similarity between the first frequency information and second frequency information corresponding to second incompatibility information and a second degree of similarity between the first order information and second order information corresponding to the second incompatibility information, the identity of the first incompatibility information and the second incompatibility information is determined.

Furthermore, according to one aspect, an information processing method that is executed by a computer is provided. Furthermore, according to one aspect, an information processing device including a storage unit and a processing unit is provided.

### Advantageous Effects of Invention

In one aspect, the identity of pieces of incompatibility information may be determined.

The above-described and other objects, features, and advantages of the present disclosure will be apparent from the following description associated with the accompanying drawings that illustrate preferred embodiments as examples of the present disclosure.

### Brief Description of Drawings

FIG. 1 is a diagram for describing an information processing device of a first embodiment.
FIG. 2 is a diagram illustrating an example of an information processing system of a second embodiment.
FIG. 3 is a block diagram illustrating a hardware example of the information processing device.
FIG. 4 is a diagram illustrating an example of a flow of incompatibility absorption of database products.
FIG. 5 is a block diagram illustrating a function example of the information processing device.
FIG. 6 is a diagram illustrating a first example of a syntax tree.
FIG. 7 is a diagram illustrating an example of attribute information.
FIGs. 8A and 8B are a diagram illustrating an example of a syntax table.
FIG. 9 is a diagram illustrating an example of an instruction table.
FIG. 10 is a diagram illustrating a first example of incompatibility information.
FIG. 11 is a diagram illustrating a second example of a syntax tree.
FIG. 12 is a diagram illustrating a second example of incompatibility information.
FIG. 13 is a diagram illustrating the second example of incompatibility information (continued).
FIG. 14 is a diagram illustrating an example of the source code of an SQL procedure.
FIG. 15 is a diagram illustrating a third example of a syntax tree.
FIG. 16 is a diagram illustrating the third example of a syntax tree (continued).
FIG. 17 is a diagram illustrating a third example of incompatibility information.
[FIG. 18] FIG. 18 is a diagram illustrating an example of an editor screen.
[FIG. 19] FIG. 19 is a diagram illustrating a first operation procedure example of the editor screen.
[FIG. 20] FIG. 20 is a diagram illustrating a second operation procedure example of the editor screen.
[FIG. 21] FIG. 21 is a diagram illustrating an example of testing of incompatibility information.
[FIG. 22] FIG. 22 is a diagram illustrating a fourth example of incompatibility information.
[FIG. 23] FIG. 23 is a diagram illustrating an example of a BOW vector table.
[FIG. 24] FIG. 24 is a diagram illustrating a first generation example of a keyword list.
[FIG. 25] FIG. 25 is a diagram illustrating a second generation example of a keyword list.
[FIG. 26] FIG. 26 is a diagram illustrating an extraction example of incompatibility sub-information.
[FIG. 27] FIG. 27 is a diagram illustrating a division example of incompatibility information.
[FIG. 28] FIG. 28 is a flowchart illustrating a procedure example of incompatibility information generation.
[FIG. 29] FIG. 29 is a flowchart illustrating the procedure example of incompatibility information generation (continued 1).
[FIG. 30] FIG. 30 is a flowchart illustrating the procedure example of incompatibility information generation (continued 2).
[FIG. 31] FIG. 31 is a flowchart illustrating the procedure example of incompatibility information generation (continued 3).
[FIG. 32] FIG. 32 is a flowchart illustrating a procedure example of incompatibility information testing.
[FIG. 33] FIG. 33 is a flowchart illustrating a procedure example of incompatibility information identity determination.
[FIG. 34] FIG. 34 is a flowchart illustrating the procedure example of incompatibility information identity determination (continued 1).
[FIG. 35] FIG. 35 is a flowchart illustrating the procedure example of incompatibility information identity determination (continued 2).

### Description of Embodiments

Hereinafter, the present embodiments will be described with reference to the drawings.

### [First Embodiment]

A first embodiment will be described.

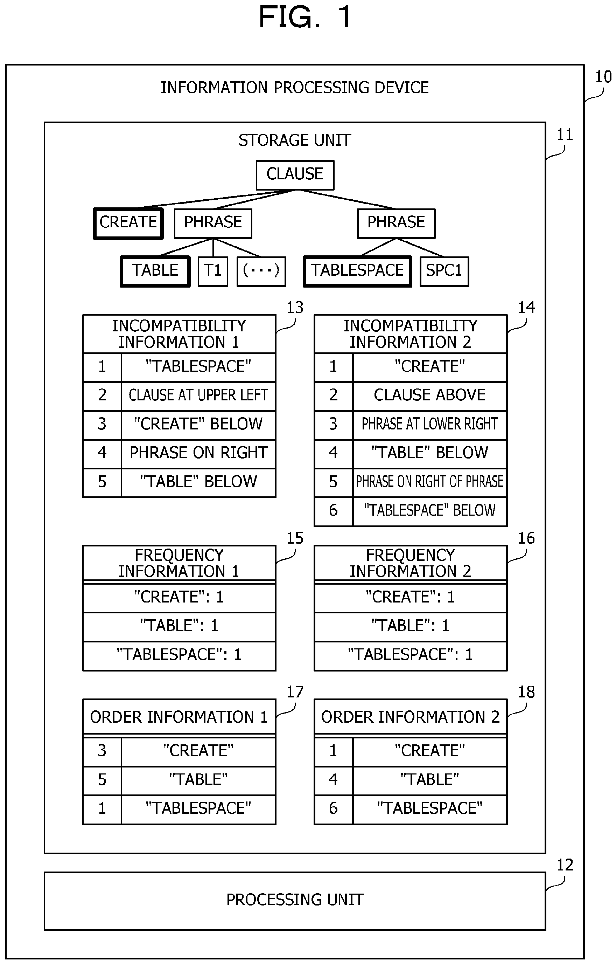

FIG. 1 is a diagram for describing an information processing device of the first embodiment.

An information processing device 10 of the first embodiment analyzes incompatibility information for searching for a description incompatible with other software from source code dependent on certain software, and determines the substantial identity between the incompatibility information and other incompatibility information. Through the identity determination, the information processing device 10 supports accumulation and management of a plurality of pieces of incompatibility information, and supports correction of the source code when software to be used is changed. The information processing device 10 may be a client device or a server device. The information processing device 10 may be referred to as a computer, an identity determination device, an incompatibility information management device, a development support device, or the like.

The information processing device 10 includes a storage unit 11 and a processing unit 12. The storage unit 11 may be a volatile semiconductor memory such as a random-access memory (RAM) or a nonvolatile storage such as a hard disk drive (HDD) or a flash memory. For example, the processing unit 12 is a processor such as a central processing unit (CPU), a graphics processing unit (GPU), a digital signal processor (DSP), or the like. However, the processing unit 12 may include an application-specific electronic circuit such as an application-specific integrated circuit (ASIC) or a field-programmable gate array (FPGA). For example, the processor executes a program stored in a memory such as a RAM (may be the storage unit 11). A set of processors may also be referred to as a multiprocessor or simply a "processor".

The storage unit 11 stores incompatibility information 13. For example, the incompatibility information 13 is information to be newly created and saved in a knowledge database. The incompatibility information 13 may be received from another information processing device such as a terminal device used by the creator of the incompatibility information 13.

The incompatibility information 13 is knowledge information in which knowledge for searching for a description incompatible with second software (incompatible portion) from the source code of a program using first software is expressed in a certain format. The first software corresponds to the migration source software, and the second software corresponds to the migration destination software. These two pieces of software may be software products provided by a software vendor, or may be middleware such as a DBMS or a Web server. Furthermore, the two pieces of software may be the same type of software provided by different software vendors, or may be different versions of software provided by the same software vendor.

The source code may define a request message indicating a request to software. A request message may be an SQL statement, and the source code may be described in SQL or SQL procedure language. Languages for describing requests to the two pieces of software are similar to each other, but may not be the same. For example, each of the two pieces of software supports a general-purpose query language such as SQL, but may independently extend the query language.

The incompatibility information 13 indicates a feature of an incompatible portion included in the source code. The incompatibility information 13 indicates a condition for a combination of two or more language elements included in the source code. A language element is a syntactic unit element such as a statement, a clause, a phrase, or a word. A language element may be referred to as a syntax element. The fact that there are two or more language elements satisfying the condition indicated by the incompatibility information 13 corresponds to the fact that an incompatible portion is included in the source code.

The condition defined by the incompatibility information 13 includes conditions for two or more keywords included in two or more language elements and a positional relationship between the two or more language elements. The positional relationship may be a positional relationship in a syntax tree generated by parsing the source code. The incompatibility information 13 may include an instruction string indicating a procedure for searching for two or more language elements satisfying the condition. For example, the incompatibility information 13 may include an instruction string indicating a search procedure in which a first language element including a certain keyword is detected and a second language element including another keyword is detected within a specific search range from the first language element.

The processing unit 12 generates frequency information 15 and order information 17 from the incompatibility information 13. The processing unit 12 extracts two or more keywords from the incompatibility information 13, and generates the frequency information 15 based on the appearance frequency of each of the two or more keywords. The appearance frequency may be the number of times of appearance of each keyword, or may be an appearance probability that is a ratio of the number of times of appearance of each keyword to the size of the incompatibility information 13.

Furthermore, the processing unit 12 may extract two or more pairs of a keyword and an attribute for the same language element from the incompatibility information 13, and generate the frequency information 15 such that the number of times of appearance of each of the two or more pairs is indicated. For example, an attribute includes a grammatical role such as an instruction word or an object type. By extracting an attribute together with a keyword, a context in which the keyword is used is taken into consideration, and a plurality of roles of the same keyword is distinguished. In this case, the appearance frequency may be the number of times of appearance of each pair, or may be an appearance probability that is a ratio of the number of times of appearance of each pair to the size of the incompatibility information 13. The frequency information 15 may be a vector in which two or more appearance frequencies are enumerated, and may be referred to as a bug of words (BOW) vector.

Furthermore, from the condition of positional relationship indicated by the incompatibility information 13, the processing unit 12 estimates the appearance order in the source code in a case where the above-described two or more keywords appear in the source code, and generates the order information 17 indicating the estimated appearance order. The order information 17 may be a keyword list in which two or more keywords are arranged in the order of appearance. The processing unit 12 may extract, from the incompatibility information 13, a search range in the horizontal direction in searching for the second language element from the first language element, and estimate an order relationship of two keywords corresponding to the two language elements from the extracted search range.

The processing unit 12 acquires frequency information 16 and order information 18 corresponding to incompatibility information 14. The incompatibility information 14 may be existing incompatibility information created before the incompatibility information 13, or may be incompatibility information registered in the knowledge database. The frequency information 16 may be generated from the incompatibility information 14 by a method similar to that for the frequency information 15, and the order information 18 may be generated from the incompatibility information 14 by a method similar to that for the order information 17.

The incompatibility information 14 may be stored in the storage unit 11, and the frequency information 16 and the order information 18 may be stored in the storage unit 11. Furthermore, the frequency information 16 and the order information 18 may be generated before the verification of the incompatibility information 13 and saved in the knowledge database, or may be generated from the incompatibility information 14 by the processing unit 12 at the time of the verification of the incompatibility information 13.

The processing unit 12 compares the frequency information 15 with the frequency information 16, and calculates a first degree of similarity between the frequency information 15 and the frequency information 16. The first degree of similarity may be cosine similarity. For example, the processing unit 12 calculates a product of two appearance frequencies for each of the same keywords or for each pair of the same keyword and attribute and adds up the products, and divides the sum by the norm of each of the pieces of frequency information 15 and 16. Furthermore, the first degree of similarity may be a Euclidean distance. A larger index value of the first degree of similarity may mean a higher degree of similarity or vice versa. For example, the maximum value of cosine similarity is 1, meaning that the degree of similarity is higher as the value is closer to 1.

Furthermore, the processing unit 12 compares the order information 17 with the order information 18, and calculates a second degree of similarity between the order information 17 and the order information 18. The second degree of similarity may be an edit distance such as a Levenshtein distance. For example, the processing unit 12 calculates the minimum number of times of keyword replacement operation for changing the keyword string indicated by the order information 17 to the keyword string indicated by the order information 18. Furthermore, the second degree of similarity may be a Euclidean distance. For example, the processing unit 12 defines the degree of similarity between two keywords, and calculates a sum or an average of the degree of similarities between keywords at the same position in the keyword list. A larger index value of the second degree of similarity may mean a higher degree of similarity or vice versa.

The processing unit 12 determines the identity of the pieces of incompatibility information 13 and 14 based on the first degree of similarity and the second degree of similarity. Being not substantially the same may also be referred to as novelty or uniqueness. Since the pieces of incompatibility information 13 and 14 define a condition for a combination of two or more language elements, there is a possibility that different search methods for searching for the same incompatible portion are defined.

For example, the incompatibility information 13 defines a search method of searching for the second language element with the first language element as a starting point, and the incompatibility information 14 defines a search method of searching for the first language element with the second language element as a starting point. In such case, the pieces of incompatibility information 13 and 14 are substantially the same, and the incompatibility information 13 does not have novelty with respect to the incompatibility information 14. As described above, pieces of incompatibility information indicating the feature of the same incompatible portion may include different descriptions.

For example, the processing unit 12 compares the first degree of similarity with a first threshold, and compares the second degree of similarity with a second threshold. When the first degree of similarity is larger than the first threshold and the second degree of similarity is larger than the second threshold, the processing unit 12 determines that the pieces of incompatibility information 13 and 14 are substantially the same. On the other hand, when the first degree of similarity is equal to or smaller than the first threshold or the second degree of similarity is equal to or smaller than the second threshold, the processing unit 12 determines that the pieces of incompatibility information 13 and 14 are not substantially the same.

The processing unit 12 may first compare the first degree of similarity with the first threshold, and compare the second degree of similarity with the second threshold when the first degree of similarity is larger than the first threshold. Furthermore, the processing unit 12 may first generate the frequency information 15 from the incompatibility information 13 and calculate the first degree of similarity, and generate the order information 17 from the incompatibility information 13 when the first degree of similarity is larger than the first threshold.

For example, the incompatibility information 13 defines a procedure for detecting a keyword "TABLESPACE", searching for a keyword "CREATE" belonging to the same clause as that of the keyword, and searching for a keyword "TABLE" included in a subsequent phrase of the keyword. On the other hand, the incompatibility information 14 defines a procedure for detecting a keyword "CREATE", searching for a keyword "TABLE" included in a phrase belonging to the same clause as that of the keyword, and searching for a keyword "TABLESPACE" included in a subsequent phrase of the phrase.

In such case, the pieces of incompatibility information 13 and 14 both include one each of the keywords "CREATE", "TABLE", and "TABLESPACE". For this reason, the pieces of frequency information 15 and 16 are the same. Furthermore, although the search orders of the three keywords in the pieces of incompatibility information 13 and 14 are different, the orders of the three keywords estimated from the condition of search range are both "CREATE", "TABLE", and "TABLESPACE". For this reason, the pieces of order information 17 and 18 are the same. Accordingly, the processing unit 12 determines that the incompatibility information 13 and the incompatibility information 14 are substantially the same.

The processing unit 12 may output the determination result of identity. For example, the processing unit 12 may save the determination result of identity in a nonvolatile storage, may display the determination result of identity on a display device, or may transmit the determination result of identity to another information processing device. Furthermore, the processing unit 12 may control registration of the incompatibility information 13 in the knowledge database based on the determination result of identity. For example, when it is determined that the pieces of incompatibility information 13 and 14 are not substantially the same, the processing unit 12 permits registration of the incompatibility information 13 in the knowledge database as new incompatibility information. On the other hand, when it is determined that the pieces of incompatibility information 13 and 14 are substantially the same, the processing unit 12 rejects registration of the incompatibility information 13.

As described above, the information processing device 10 of the first embodiment generates, from the incompatibility information 13, the frequency information 15 based on the appearance frequencies of two or more keywords and the order information 17 indicating the appearance order of the two or more keywords. Then, the information processing device 10 determines the identity of the pieces of incompatibility information 13 and 14 based on the degree of similarity of the pieces of frequency information 15 and 16 and the degree of similarity of the pieces of order information 17 and 18. Accordingly, even if the descriptions of the pieces of incompatibility information 13 and 14 are different, the information processing device 10 may determine whether or not the pieces of incompatibility information 13 and 14 are substantially the same incompatibility information that detects the same incompatible portion from the source code.

Therefore, the information processing device 10 may suppress duplicate registration of substantially the same incompatibility information in the knowledge database, and may streamline management of the knowledge database. Furthermore, the information processing device 10 may distinguish between new incompatibility information and incompatibility information that is not substantially new, and the value of the new incompatibility information may be appropriately evaluated.

Furthermore, the information processing device 10 evaluates the degree of similarity of the pieces of incompatibility information 13 and 14 based on the appearance frequency of a keyword. The appearance frequency of a keyword may be simply calculated from the incompatibility information 13. Therefore, the information processing device 10 may efficiently evaluate the degree of similarity of the pieces of incompatibility information 13 and 14. Furthermore, the information processing device 10 evaluates the degree of similarity of the pieces of incompatibility information 13 and 14 based on the appearance order of keywords in addition to the appearance frequency of a keyword. Therefore, the information processing device 10 may take into consideration the difference in meaning based on the difference in word order, and the accuracy of evaluation of the degree of similarity is improved.

For example, the SQL statement "CREATE TABLE ... TABLESPACE ..." and the SQL statement "CREATE TABLESPACE ... TABLE ..." may be recognized as having different features in terms of incompatibility. In this respect, although the appearance frequencies of the keywords are the same in the two pieces of incompatibility information for searching the above two SQL statements, the appearance orders of the keywords are different. Accordingly, the information processing device 10 may appropriately evaluate the degree of similarity of the pieces of incompatibility information by taking the appearance order into consideration.

Furthermore, the information processing device 10 may evaluate the degree of similarity of the pieces of incompatibility information 13 and 14 based on the appearance frequency of a keyword, and evaluate the degree of similarity of the pieces of incompatibility information 13 and 14 based on the appearance order of keywords only when the degree of similarity in the first stage is high. In this case, the information processing device 10 may efficiently evaluate the degree of similarity of the pieces of incompatibility information 13 and 14. Furthermore, the information processing device 10 may narrow down other pieces of incompatibility information that have a possibility of being similar to the incompatibility information 13 based on the appearance frequency of a keyword, and then determine another piece of incompatibility information that is similar to the incompatibility information 13 based on the appearance order of keywords. In this case, the information processing device 10 may efficiently extract another piece of incompatibility information that is similar to the incompatibility information 13.

### [Second Embodiment]

Next, a second embodiment will be described. An information processing system of the second embodiment analyzes the source code of a program that uses a database product, and supports correction work when the database product to be used is changed. A change of database product includes a change between database products provided from different software vendors and a change between different versions provided from the same software vendor. Incompatibility may exist between database products. Correcting the source code so as to resolve a failure due to incompatibility may be referred to as incompatibility absorption.

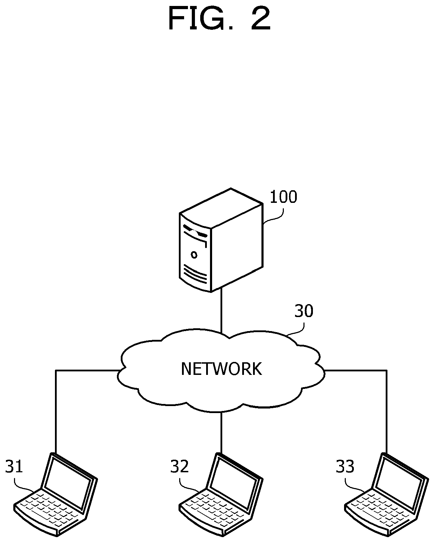

FIG. 2 is a diagram illustrating an example of the information processing system of the second embodiment.

The information processing system of the second embodiment includes terminal devices 31, 32, and 33 and an information processing device 100 that are coupled to a network 30. The network 30 may include a local area network (LAN) and may include the Internet. The terminal devices 31, 32, and 33 are client computers operated by users. The information processing device 100 is a server computer accessed from the terminal devices 31, 32, and 33. The information processing device 100 corresponds to the information processing device 10 of the first embodiment.

The terminal device 31 is a client computer used by a creator who creates incompatibility information. Incompatibility information is knowledge information shared by a plurality of persons concerned who is engaged in the task of incompatibility absorption. Incompatibility information defines an identification method of identifying an incompatible portion from the source code and a rewriting method of rewriting the identified incompatible portion so as to resolve the incompatibility. The terminal device 31 communicates with the information processing device 100, and uploads the created incompatibility information to the information processing device 100. As will be described later, the terminal device 31 may support creation of incompatibility information by using an editor provided from the information processing device 100.

The terminal device 32 is a client computer used by an approver who approves the incompatibility information uploaded to the information processing device 100. The incompatibility information uploaded from the terminal device 31 to the information processing device 100 is set to a "prepared" state, and formal registration in the knowledge database is suspended. The incompatibility information in the prepared state is formally registered in the knowledge database through automatic verification by the information processing device 100 and the approval of the approver. The approver performs verification work such as review of the uploaded incompatibility information or test execution, and confirms correct operation of the incompatibility information and the validity of description.

The terminal device 33 is a client computer used by an incompatibility absorption operator who performs incompatibility absorption by using the incompatibility information accumulated in the information processing device 100. The terminal device 33 searches for and receives, from the information processing device 100, incompatibility information valid for a pair of a database product before change and a database product after change. The terminal device 33 applies the incompatibility information to the source code corresponding to the database product before change, and automatically converts the source code so as to conform with the database product after change.

The information processing device 100 is a server computer that manages incompatibility information. The information processing device 100 provides the terminal device 31 with a user interface of an editor that supports creation of incompatibility information. However, the terminal device 31 may create incompatibility information without using the editor. The information processing device 100 receives incompatibility information from the terminal device 31. Then, the information processing device 100 sets the received incompatibility information to the prepared state and performs automatic verification. The automatic verification includes automatic testing using sample source code and a test database, and identity determination of determining whether the incompatibility information is substantially the same as existing incompatibility information.

Furthermore, the information processing device 100 receives an approval message from the terminal device 32. The information processing device 100 cancels the prepared state of the incompatibility information for which the automatic verification has succeeded and the approval message has been received, and formally registers the incompatibility information in the knowledge database. Furthermore, in response to a request from the terminal device 33, the information processing device 100 searches, from the knowledge database, for the incompatibility information that conforms with the current incompatibility absorption work, and transmits the corresponding incompatibility information to the terminal device 33.

Note that, as a modification example, a part of the above-described functions may be transferred between the terminal devices 31, 32, and 33 and the information processing device 100. For example, application software corresponding to the editor that supports creation of incompatibility information may be installed in the terminal device 31. In such case, the information processing device 100 does not have to provide the terminal device 31 with the editor function. Furthermore, the terminal device 31 may execute the automatic verification of incompatibility information. Furthermore, the terminal devices 31, 32, and 33 may hold a copy of the knowledge database of incompatibility information. Furthermore, the information processing device 100 may execute incompatibility absorption in response to a request from the terminal device 33.

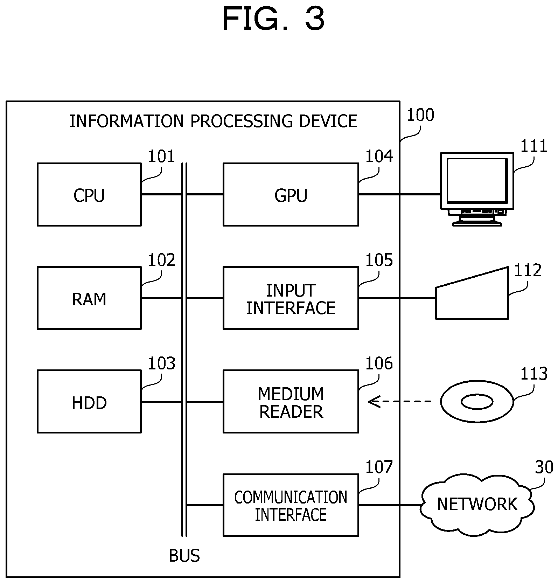

FIG. 3 is a block diagram illustrating a hardware example of the information processing device.

The information processing device 100 includes a CPU 101, a RAM 102, an HDD 103, a CPU 104, an input interface 105, a medium reader 106, and a communication interface 107 that are coupled to a bus. The CPU 101 corresponds to the processing unit 12 of the first embodiment. The RAM 102 or the HDD 103 corresponds to the storage unit 11 of the first embodiment. The terminal devices 31, 32, and 33 may include hardware similar to that of the information processing device 100.

The CPU 101 is a processor that executes instructions of a program. The CPU 101 loads at least a part of a program and data stored in the HDD 103 into the RAM 102 and executes the program. The information processing device 100 may include a plurality of processors. A set of processors may also be referred to as a multiprocessor or simply a "processor".

The RAM 102 is a volatile semiconductor memory that temporarily stores a program to be executed by the CPU 101 and data to be used for computation in the CPU 101. The information processing device 100 may include a volatile memory of a type other than the RAM.

The HDD 103 is a nonvolatile storage that stores a program of software such as an operating system (OS), middleware, and application software, and data. The information processing device 100 may include another type of nonvolatile storage such as a flash memory or a solid-state drive (SSD).

The CPU 104 generates an image in cooperation with the CPU 101, and outputs the image to a display device 111 coupled to the information processing device 100. For example, the display device 111 is a cathode ray tube (CRT) display, a liquid crystal display, an organic electroluminescence (EL) display, or a projector. Note that another type of output device such as a printer may be coupled to the information processing device 100.

The input interface 105 accepts an input signal from an input device 112 coupled to the information processing device 100. For example, the input device 112 is a mouse, a touch panel, or a keyboard. A plurality of input devices may be coupled to the information processing device 100.

The medium reader 106 is a reading device that reads a program and data recorded in a recording medium 113. For example, the recording medium 113 is a magnetic disk, an optical disc, or a semiconductor memory. The magnetic disk includes a flexible disk (FD) and an HDD. The optical disc includes a compact disc (CD) and a Digital Versatile Disc (DVD). The medium reader 106 copies the program and data read from the recording medium 113 to another recording medium such as the RAM 102 or the HDD 103. The read program may be executed by the CPU 101.

The recording medium 113 may be a portable-type recording medium. The recording medium 113 may be used for distribution of a program and data. Furthermore, the recording medium 113 and the HDD 103 may be referred to as a computer-readable recording medium.

The communication interface 107 is coupled to the network 30, and communicates with the terminal devices 31, 32, and 33 via the network 30. The communication interface 107 may be a wired communication interface coupled to a wired communication device such as a switch or a router, or may be a wireless communication interface coupled to a wireless communication device such as a base station or an access point.

Next, a flow of incompatibility absorption by the information processing system will be described.

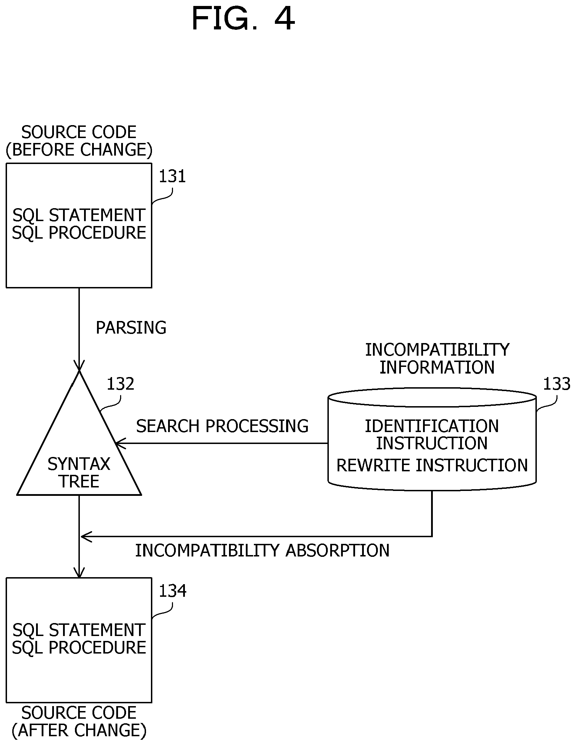

FIG. 4 is a diagram illustrating an example of a flow of incompatibility absorption of database products.

The information processing system acquires source code 131 dependent on a database product before change. The source code 131 includes an SQL statement or SQL procedure code. An SQL statement is a database query described using SQL. Although the basic specifications of SQL are standardized, some database products have unique specifications in which the basic specifications are extended. SQL procedure code is a program of a procedure-type language defined to be consistent with SQL, and operates as a stored procedure.

The information processing system performs parsing of the source code 131 and generates a syntax tree 132. The syntax tree 132 is tree-type data indicating a structure of language elements such as a statement, a clause, a phrase, and a word. Unlike a case where only lexical analysis is performed, the syntax tree 132 generated through parsing may express a context in which each word appears in the source code 131. For example, in an SQL statement or SQL procedure code, even when variables are the same, the effective ranges of the variables may differ depending on the position where the variables are described. For this reason, the syntax tree 132 is useful in incompatibility absorption. However, the information processing system does not have to perform semantic analysis on the source code 131, and the syntax tree 132 does not have to include semantic information indicating the logical meaning of a language element.

The information processing system holds, as knowledge information, incompatibility information 133 associated with a pair of a database product before change and a database product after change. A database product may be identified by a pair of a product name and a version number. The incompatibility information 133 includes a column of identification instruction and a column of rewrite instruction. An identification instruction is an instruction for identifying, from the syntax tree 132, an incompatible portion that normally operates in a database product before change but has a possibility of causing a failure in a database product after change. A rewrite instruction is an instruction for rewriting the syntax tree 132 so that a failure does not occur in a database product after change for an incompatible portion identified by an identification instruction.

The information processing system executes an identification instruction included in the incompatibility information 133 for the syntax tree 132. When an incompatible portion is detected from the syntax tree 132 by the identification instruction, the information processing system executes a rewrite instruction included in the incompatibility information 133 for the syntax tree 132 and performs incompatibility absorption. Accordingly, the syntax tree 132 is rewritten so as to resolve the incompatibility. The information processing system generates source code 134 from the rewritten syntax tree 132. The source code 134 is a result of performing incompatibility absorption for the source code 131, and is source code for a database product after change.

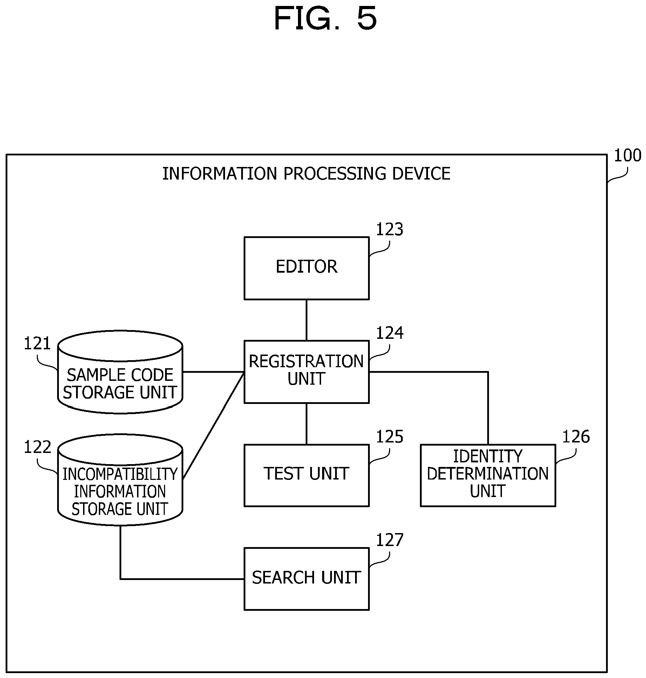

FIG. 5 is a block diagram illustrating a function example of the information processing device.

The information processing device 100 includes a sample code storage unit 121 and an incompatibility information storage unit 122. For example, these storage units are implemented by using the RAM 102 or the HDD 103. Furthermore, the information processing device 100 includes an editor 123, a registration unit 124, a test unit 125, an identity determination unit 126, and a search unit 127. For example, these processing units are implemented by using the CPU 101 and a program.

The sample code storage unit 121 stores a sample of the source code before conversion. Source code includes an SQL statement or SQL procedure code. Source code is created by a creator of incompatibility information and uploaded from the terminal device 31 to the information processing device 100. When incompatibility information is created by using the editor 123, source code may be provided from the terminal device 31. Furthermore, when incompatibility information is registered in the information processing device 100, source code may be provided from the terminal device 31 together with the incompatibility information.

The source code provided when the editor 123 is used and the source code provided when incompatibility information is registered may be the same or different. Furthermore, the sample code storage unit 121 may store a correct execution result expected in a case where the source code after conversion is executed in a database product after change. For example, a correct execution result indicates a table generated by an SQL statement or SQL procedure code included in the source code. A correct execution result may be provided from the terminal device 31 together with incompatibility information and the source code before conversion when the incompatibility information is registered.

The incompatibility information storage unit 122 is a knowledge database that accumulates incompatibility information. Incompatibility information is knowledge information indicating technical know-how related to incompatibility absorption between database products. Incompatibility information includes an identification instruction indicating a procedure for identifying an incompatible portion from a syntax tree and a rewrite instruction indicating a procedure for rewriting the identified incompatible portion. As will be described later, incompatibility information may include a plurality of pieces of incompatibility sub-information as reusable units.

Each piece of incompatibility information is associated with a pair of a database product before change and a database product after change. The incompatibility information storage unit 122 may store management information for searching for available incompatibility information from pairs of a database product before change and a database product after change. Incompatibility information uploaded from the terminal device 31 is first set to the prepared state. After the usefulness of the incompatibility information in the prepared state is confirmed through automatic verification by the test unit 125 and the identity determination unit 126 and the approval of an approver, the prepared state is cancelled and the incompatibility information is formally registered in the incompatibility information storage unit 122.

The editor 123 provides a graphical user interface for efficiently creating incompatibility information, and supports creation of incompatibility information by the terminal device 31. The editor 123 acquires a sample of the source code before conversion from the terminal device 31. The editor 123 parses the source code and generates a syntax tree, and displays the generated syntax tree on a display device of the terminal device 31. The editor 123 receives, from the terminal device 31, operation of sequentially selecting two or more nodes included in the syntax tree or operation of rewriting some nodes. The editor 123 sequentially generates identification instructions and rewrite instructions of incompatibility information based on the received operation, and transmits automatically generated incompatibility information to the terminal device 31.

The registration unit 124 receives, from the terminal device 31, incompatibility information and a sample of the source code before conversion. The registration unit 124 may further receive, from the terminal device 31, a correct execution result in a database product after change. The incompatibility information may be information created by using the editor 123 or may be information created without using the editor 123. The source code may be the same as that used in the editor 123.

The registration unit 124 sets the received incompatibility information to the prepared state, and temporarily registers the incompatibility information in the incompatibility information storage unit 122. Furthermore, the registration unit 124 saves the received source code in the sample code storage unit 121, and when a correct execution result is provided, saves the correct execution result in the sample code storage unit 121. Then, the registration unit 124 requests the test unit 125 to perform automatic testing of the incompatibility information, and requests the identity determination unit 126 to perform identity determination of the incompatibility information. The automatic testing and identity determination are scheduled as background processing. Furthermore, the registration unit 124 transmits a request for approval of the incompatibility information to the terminal device 32.

The registration unit 124 acquires a result of the automatic testing from the test unit 125, acquires a result of the identity determination from the identity determination unit 126, and receives an approval result of an approver from the terminal device 32. The result of the automatic testing indicates whether or not the incompatibility information operates normally. The result of the identity determination indicates whether or not the incompatibility information has novelty of being not substantially the same as other incompatibility information. The approval result indicates whether or not the approver has approved the incompatibility information. When the incompatibility information operates normally, has novelty, and has been approved by the approver, the registration unit 124 cancels the prepared state of the incompatibility information.

The test unit 125 tests incompatibility information in the prepared state. The test unit 125 applies the incompatibility information to a sample of the source code before conversion, and generates the source code after conversion. The test unit 125 uses a test database corresponding to a database product after change and executes the SQL statement or SQL procedure code included in the source code after conversion. The test database may be installed in the information processing device 100 or may be installed in another information processing device.

The test unit 125 extracts an execution result from the test database, and compares the execution result with a correct execution result. When the current execution result agrees with the correct execution result, the test unit 125 determines that the test has succeeded and the incompatibility information operates normally. On the other hand, when the current execution result does not agree with the correct execution result, the test unit 125 determines that the test has failed and the incompatibility information does not operate normally. However, in a case where the correct execution result is not provided from the terminal device 31, the test unit 125 transmits the execution result in the test database to the terminal device 31, and receives an evaluation result indicating whether or not the current execution result is normal from the terminal device 31.

The identity determination unit 126 determines whether or not incompatibility information in the prepared state is substantially the same as existing incompatibility information registered in the incompatibility information storage unit 122. When the incompatibility information in the prepared state and the existing incompatibility information include the same identification instruction, both are knowledge information for resolving the same incompatibility, and the incompatibility information in the prepared state does not have novelty. Furthermore, even in a case where the incompatibility information in the prepared state and the existing incompatibility information include different identification instructions, when the incompatible portions searched for in a syntax tree are the same, both are knowledge information for resolving the same incompatibility, and the incompatibility information in the prepared state does not have novelty. Details of identity determination will be described later.

In response to a request from the terminal device 33, the search unit 127 reads incompatibility information from the incompatibility information storage unit 122 and transmits the incompatibility information to the terminal device 33. For example, the search unit 127 accepts, from the terminal device 33, designation of a database product before change and a database product after change. The search unit 127 searches for the incompatibility information associated with the pair of designated database products from the incompatibility information storage unit 122, and provides the terminal device 33 with the incompatibility information that has been searched for.

Next, syntax tree and incompatibility information will be described.

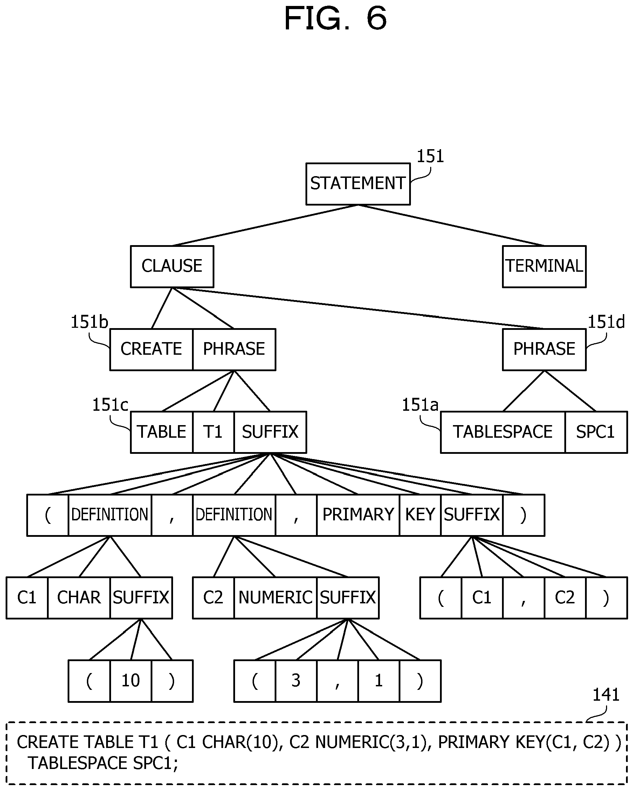

FIG. 6 is a diagram illustrating a first example of a syntax tree.

Here, the syntax of an SQL statement will be described. A statement includes a terminal symbol at the end. A statement may include a clause before a terminal symbol. A clause includes an instruction word at the head, and includes a phrase, an expression, or a word between the instruction word and a terminal symbol. A phrase includes an object type, a preposition, an adverb, or a parenthesis at the head. A phrase subsequently includes a phrase, an expression, or a word, and a phrase, an expression, or a word may be consecutive two or more times. A phrase may subsequently include a clause. An expression includes a function name or a word, and subsequently includes an operator.

A terminal symbol represents the end of a statement. A terminal symbol may be a semicolon (";"). A word is the smallest linguistic unit having a meaning in a statement. A word includes an identifier, a reserved word, a function name, and an operator. A reserved word includes an instruction word, an object type, and other reserved words. An instruction word indicates an instruction such as CREATE or UPDATE. An object type indicates a type of an object such as TABLE. Other reserved words are reserved words other than an instruction word and an object type, such as BEGIN. An expression includes a pair of a word and a word connected by an operator and a pair of a word and an expression connected by an operator. Furthermore, an expression includes a pair of a function name and an argument. An argument is sandwiched between an open parenthesis ("(") and a close parenthesis (")").

A phrase includes a general phrase, a predicate phrase, a suffix phrase, a definition phrase, and an unclassified phrase. A general phrase is a pair of a modifier and an object. For example, a pair of an object type and an identifier is a general phrase, as in TABLE T1. A predicate phrase includes a pair of a preposition and an object, as in FROM T1 and AS T2. Furthermore, a predicate phrase includes a pair of an adverb and an object, as in WHERE C1. A suffix phrase is sandwiched between an open parenthesis and a close parenthesis, and may be used for designation of a data type or designation of a key column. A definition phrase is a language element that designates a type of a variable, and includes a word other than a reserved word and a reserved word indicating a data type. An unclassified phrase is a phrase that does not fall under any of a general phrase, a predicate phrase, a suffix phrase, and a definition phrase.

Note that, in the examples of a syntax tree, a terminal symbol may be described as "terminal", a general phrase as "phrase", a predicate phrase as "predicate", a suffix phrase as "suffix", a definition phrase as "definition", and an unclassified phrase as "unclassified".

A syntax tree 151 indicates the syntax of source code 141. The source code 141 includes the SQL statement CREATE TABLE T1 (C1 CHAR(10), C2 NUMERIC(3,1), PRIMARY KEY(C1,C2)) TABLESPACE SPC1;. The syntax tree 151 is an undirected graph of a tree structure. The syntax tree 151 includes a plurality of nodes each indicating a language element and a plurality of edges connecting the plurality of nodes to the tree structure. An edge between an upper node and a lower node represents that a language element corresponding to the lower node is included in a language element corresponding to the upper node. The appearance order of a plurality of language elements is held in the same level. A language element corresponding to the left node appears before a language element corresponding to the right node.

The syntax tree 151 includes nodes 151a, 151b, 151c, and 151d. The node 151a represents an object type of the second phrase included in a clause, and corresponds to the character string TABLESPACE. The node 151b represents an instruction word at the head of the clause, and corresponds to the character string CREATE. The node 151c represents an object type of the first phrase included in the clause, and corresponds to the character string TABLE. The node 151d represents the second phrase included in the clause. The node 151a is the first child node of the node 151d. Note that each node has attributes such as a type and a value of a language element. In the displayed examples of a syntax tree, only some attributes are displayed.

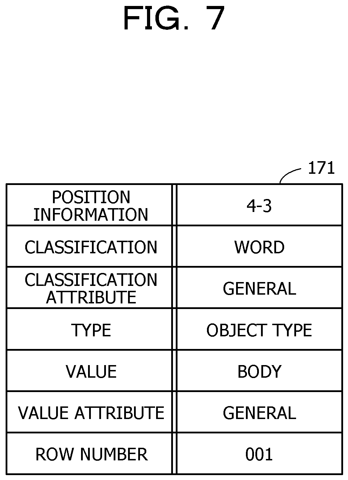

FIG. 7 is a diagram illustrating an example of attribute information.

Attribute information 171 is associated with one node of a syntax tree. The attribute information 171 includes position information, classification, classification attribute, type, value, value attribute, and row number. However, depending on the type of a node, the item values of some items may not be defined.

Position information indicates the position of a node in a syntax tree. As will be described later, the position of a node may be represented by two dimensional coordinates including a vertical position and a horizontal position. Classification indicates the uppermost classification such as statement, clause, phrase, expression, word, and the like. Classification attribute indicates the distinction between general node and interpolation node. A general node indicates a language element that is directly extracted from a description of the source code. An interpolation node indicates a language element that is not explicitly described in the source code but is interpolated for interpretation. Type is a group obtained by further fragmenting the above-described classification, such as general phrase and instruction word. Value is a character string of a word. Value attribute is a type of a value. Value attribute includes general character string and interpolation character string. Row number is the number of a row where the language element corresponding to the node appears in the source code.

A syntax tree may be represented as a syntax table of a two dimensional table format. Accordingly, identification of the position of a node is easy, and identification of nodes and description of the procedure of a node search are easy. Each node of a syntax tree is arranged in a syntax table in accordance with the following rules.

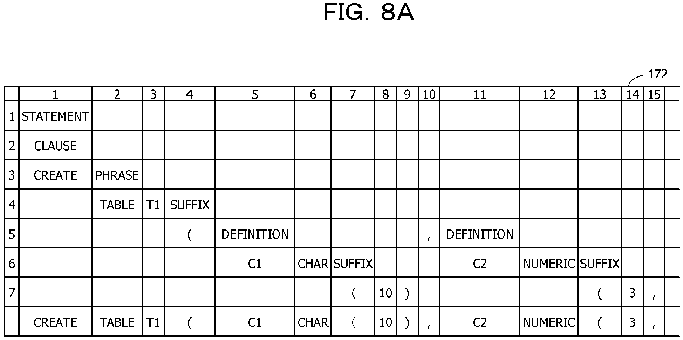

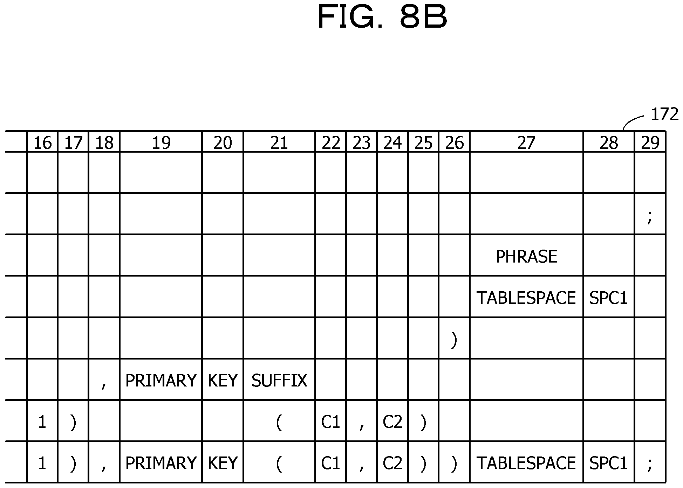

FIGs. 8A and 8B are a diagram illustrating an example of a syntax table.

A syntax table 172 is a syntax table equivalent to the syntax tree 151 in FIG. 6. The position coordinates of the upper left cell in the syntax table 172 are (1, 1). As the position of a cell progresses downward, the row number indicating a vertical position increases, and as the position of a cell progresses rightward, the column number indicating a horizontal position increases. The position coordinates of each cell are defined as (row number, column number).

The node indicating a statement is arranged in the upper left cell of the syntax table 172. The leftmost child node among child nodes directly below a certain node is arranged in a cell immediately below the cell corresponding to the node. A cell immediately below is a cell whose row number is larger by one and whose column number is the same. Another node that is another node having the same parent node as a certain node and is on the right side of the node, is arranged in a cell on the right side of the cell corresponding to the node. A cell on the right side is a cell whose row number is the same and whose column number is larger by one. A cell in which each node is arranged is determined in the order of depth priority.

A node of one word included in a syntax tree is arranged in one column. Therefore, while the row numbers of two nodes in a parent-child relationship are continuous, the column numbers of two nodes having the same parent node may be discontinuous. Accordingly, the word nodes corresponding to the 29 words included in the source code 141 are arranged from the first column to the 29th column of the syntax table 172 while maintaining the order. The syntax table 172 and the syntax tree 151 may be mutually converted.

Incompatibility information includes one or more identification instructions for searching for a node satisfying a condition in a syntax tree and one or more rewrite instructions for rewriting some nodes included in the syntax tree.

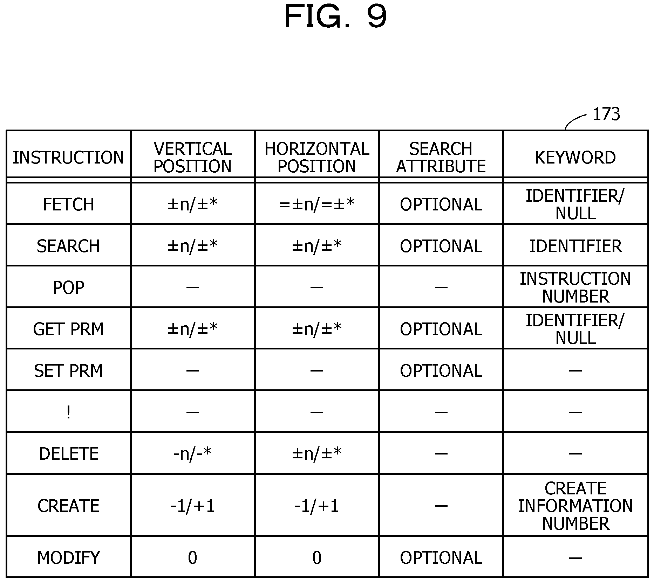

FIG. 9 is a diagram illustrating an example of an instruction table.

An instruction table 173 indicates definitions of instructions that may be used in incompatibility information. One record in the instruction table 173 indicates one instruction. One record in the instruction table 173 includes an instruction, a vertical position, a horizontal position, a search attribute, and a keyword.

A vertical position, a horizontal position, a search attribute, and a keyword are arguments of an instruction. A vertical position is a condition for a positional relationship in the up-down direction between the current node of interest and a target node. + indicates an upward direction, - indicates a downward direction, n indicates the distance from the current node, and * indicates no distance limitation. A horizontal position is a condition for a positional relationship in the left-right direction between the current node of interest and a target node. = indicates the same horizontal position as the current node, + indicates the rightward direction, - indicates the leftward direction, n indicates the distance from the current node, and * indicates no distance limitation.

A horizontal position may be designated in the format of [instruction number]. This indicates that a search is performed with the horizontal position of the node selected by the instruction having the instruction number as the starting point. Furthermore, a horizontal position may be designated in the format of [instruction number 1:instruction number 2]. This indicates that a search is performed between the horizontal position of a node selected by the instruction having the instruction number 1 and the horizontal position of a node selected by the instruction having the instruction number 2. A search attribute is a condition for the classification, classification attribute, type, and value attribute of a target node.

A keyword is information other than a search attribute for identifying a node. A keyword may be an identifier as the value of a word. Furthermore, as a keyword, instruction number of an executed instruction may be designated. This indicates that the node identified by the instruction is to be reselected. Furthermore, an action to be executed when a result of an instruction is true, that is, when a node satisfying a condition exists, may be defined in association with the instruction.

No action indicates proceeding to the next instruction. RET indicates returning to the instruction when the next instruction is executed and a result of the next instruction is false. NEXT[instruction number] indicates jumping to the instruction of the designated instruction number. Furthermore, another instruction itself using the attribute information of the current node of interest may be defined as an action.

Instructions include FETCH, SEARCH, POP, GET PRM, SET PRM, !, DELETE, CREATE, and MODIFY. FETCH, SEARCH, POP, GET PRM, SET PRM, and ! may be used as identification instructions. DELETE, CREATE, and MODIFY may be used as rewrite instructions.

FETCH is an instruction of searching for a node satisfying a condition and changing the current node of interest (current node) to the detected node. SEARCH is an instruction of searching for a node satisfying a condition but not changing the current node. POP is an instruction of returning the current node to the node selected by executed FETCH. GET PRM is an instruction of saving the attribute information of a node satisfying a condition in a stack. SET PRM is an instruction of outputting the attribute information saved in the stack. SET PRM may be used in a keyword of FETCH or SEARCH. ! is a negation instruction of inverting true and false. By adding ! before SEARCH, a result of the instruction is determined to be true when a node satisfying a condition is not detected.

DELETE is an instruction of deleting, from a syntax tree, a node in a designated range based on the current node. CREATE is an instruction of inserting a subtree before or after the current node. The subtree to be inserted is saved as CREATE information separately from an instruction string. CREATE has, as an argument, a keyword including a CREATE information number for identifying CREATE information. MODIFY is an instruction of rewriting the attribute information of the current node. A regular expression program may be designated in an action.

Usually, incompatibility information first searches for the most characteristic keyword related to an incompatible portion. The first keyword may be referred to as an anchor, and a search for an anchor from a syntax tree may be referred to as an anchor search. The incompatibility information searches for a peripheral node whose attribute satisfies a specific condition from the periphery of the anchor in a syntax tree. Accordingly, a node set forming the incompatible portion is identified. A feature of an incompatible portion may be referred to as a unique condition. Once the incompatible portion is identified from the syntax tree, the incompatibility information identifies a node to be rewritten with any of the detected nodes as a base point. The base point may be the anchor.

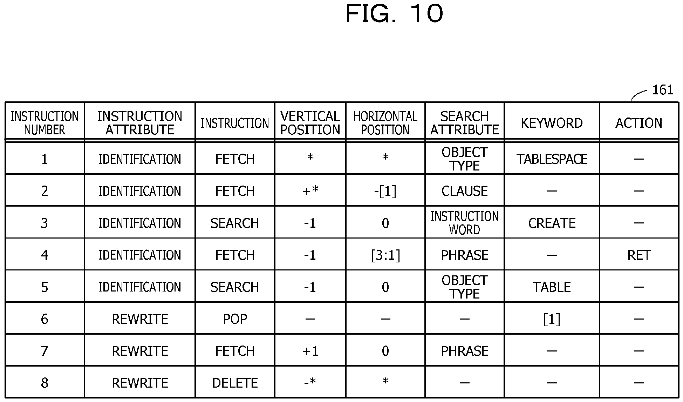

FIG. 10 is a diagram illustrating a first example of incompatibility information.

Incompatibility information 161 is an example of incompatibility information applied to the syntax tree 151 in FIG. 6. Here, a case is considered in which TABLESPACE SPC1 included in the source code 141 is incompatible with the database product after change, and the incompatibility is resolved by deleting TABLESPACE SPC1. One record of the incompatibility information 161 corresponds to one identification instruction or one rewrite instruction. Each record of the incompatibility information 161 includes an instruction number, an instruction attribute, an instruction, a vertical position, a horizontal position, a search attribute, a keyword, and an action.

Instruction numbers are natural numbers in ascending order indicating the execution order of instructions. An instruction attribute indicates the distinction between identification instruction and rewrite instruction. A vertical position, a horizontal position, a search attribute, and a keyword are arguments of an instruction. An action indicates processing to be executed when a result of an instruction is true. The incompatibility information 161 includes eight instructions of the first instruction to the eighth instruction. The first instruction to the fifth instruction are identification instructions, and the sixth instruction to the eighth instruction are rewrite instructions.

The first instruction searches the syntax tree 151 for the node 151a whose type is object type and whose value is TABLESPACE, and selects the node as the current node. The second instruction searches for a node that is a node whose vertical position is above the current node, whose horizontal position is on the left side of the current node, and whose classification is clause, and is closest to the current node, and selects the node as the current node. The third instruction searches for the node 151b that is a node directly below the current node, whose type is instruction word, and whose value is CREATE. The fourth instruction searches for a node whose vertical position is immediately below the current node, whose horizontal position is between CREATE and TABLESPACE, and whose classification is phrase, and selects the node as the current node.

The fifth instruction searches for the node 151c that is a node directly below the current node, whose type is object type, and whose value is TABLE. When a result of the fifth instruction is false, the processing returns to the fourth instruction. The sixth instruction returns the current node to the node 151a of TABLESPACE selected in the first instruction. The seventh instruction searches for the node 151d that is a node directly above the current node and whose classification is phrase, and selects the node as the current node. The eighth instruction deletes the current node and the nodes under the current node.

Starting from the first instruction, when the processing has reached the fifth instruction which is the last identification instruction, it is determined that the syntax tree 151 includes an incompatible portion. Then, using a result of the identification instructions, the rewrite instructions are executed following the identification instructions. However, the information processing system may execute only the identification instructions among the instructions included in the incompatibility information 161, and output information on the detected incompatible portion.

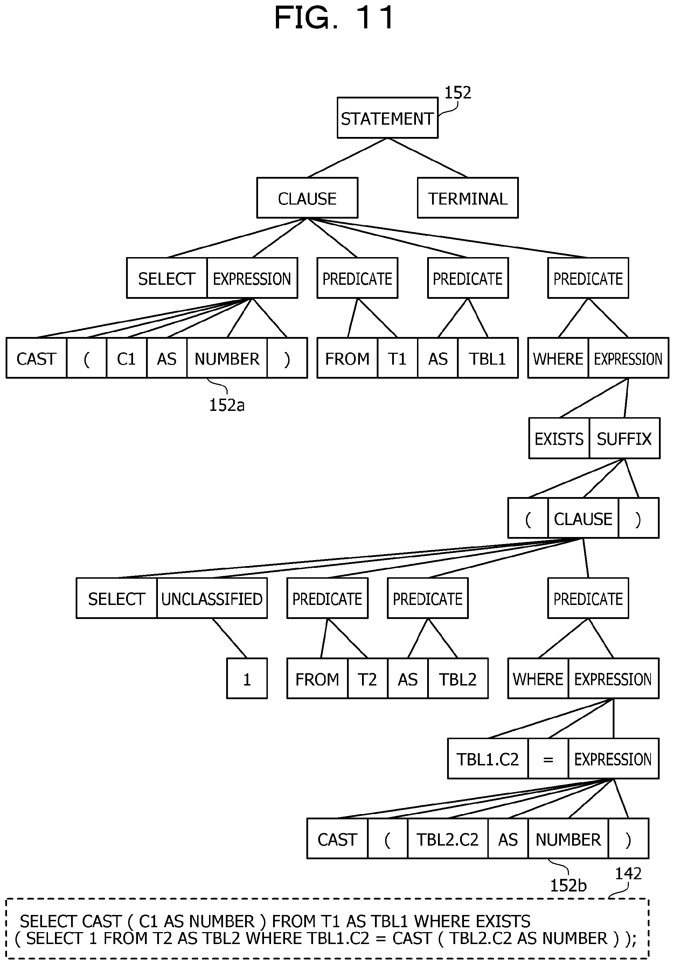

FIG. 11 is a diagram illustrating a second example of a syntax tree.

A syntax tree 152 indicates the syntax of source code 142. The source code 142 includes the SQL statement SELECT CAST(C1 AS NUMBER) FROM T1 AS TBL1 WHERE EXISTS(SELECT 1 FROM T2 AS TBL2 WHERE TBL1.C2 = CAST(TBL2.C2 AS NUMBER));. This SQL statement includes a subquery after WHERE EXISTS, and has a complicated syntax. The syntax tree 152 includes nodes 152a and 152b. The node 152a represents a data type in the expression included in the main query, and corresponds to the character string NUMBER. The node 152b represents a data type in the expression included in the subquery, and corresponds to the character string NUMBER.

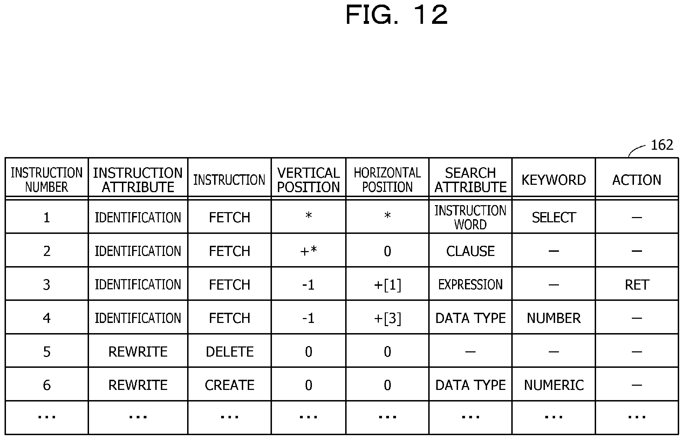

FIG. 12 is a diagram illustrating a second example of incompatibility information.

Incompatibility information 162 is an example of incompatibility information applied to the syntax tree 152 in FIG. 11. Here, a case is considered in which the data type NUMBER included in the source code 142 is incompatible with the database product after change, and the incompatibility is resolved by replacing NUMBER with NUMERIC.

The incompatibility information 162 includes 19 instructions of the first instruction to the 19th instruction. The first instruction to the fourth instruction are identification instructions for searching for the first data type, and the fifth instruction to the sixth instruction are rewrite instructions for rewriting the first data type. The seventh instruction to the 17th instruction are identification instructions for searching for the second data type, and the 18th instruction to the 19th instruction are rewrite instructions for rewriting the second data type.

The first instruction searches the syntax tree 152 for a node whose type is instruction word and whose value is SELECT, and selects the node as the current node. The second instruction searches for a node whose vertical position is above the current node and whose classification is clause, and selects the node as the current node. The third instruction searches for a node whose vertical position is immediately below the current node, whose horizontal position is on the right side of SELECT of the first instruction, and whose classification is expression, and selects the node as the current node. The fourth instruction searches for the node 152a whose vertical position is immediately below the current node, whose horizontal position is on the right side of the current node, whose type is data type, and whose value is NUMBER, and selects the node as the current node. When a result of the fourth instruction is false, the processing returns to the third instruction.

The fifth instruction deletes the current node. The sixth instruction generates a new node whose type is data type and whose value is NUMERIC, and inserts the new node at the position of the deleted node.

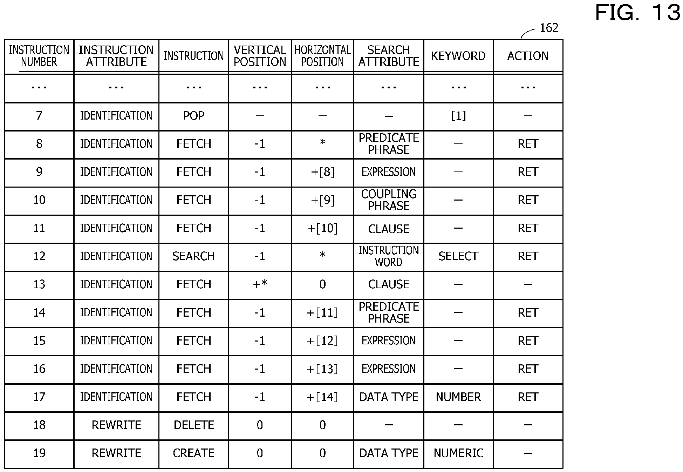

FIG. 13 is a diagram illustrating the second example of incompatibility information (continued).

The seventh instruction returns the current node to the node of SELECT selected in the first instruction. The eighth instruction searches for a node whose vertical position is immediately below the current node and whose type is predicate phrase, and selects the node as the current node. The ninth instruction searches for a node whose vertical position is immediately below the current node, whose horizontal position is on the right side of the current node, and whose classification is expression, and selects the node as the current node. When a result of the ninth instruction is false, the processing returns to the eighth instruction. The tenth instruction searches for a node whose vertical position is immediately below the current node, whose horizontal position is on the right side of the current node, and whose type is coupling phrase, and selects the node as the current node. When a result of the tenth instruction is false, the processing returns to the ninth instruction.

The 11th instruction searches for a node whose vertical position is immediately below the current node, whose horizontal position is on the right side of the current node, and whose classification is clause, and selects the node as the current node. When a result of the 11th instruction is false, the processing returns to the tenth instruction. The 12th instruction searches for a node whose vertical position is immediately below the current node, whose type is instruction word, and whose value is SELECT. When a result of the 12th instruction is false, the processing returns to the 11th instruction. The 13th instruction searches for a node that is above SELECT of the 12th instruction and whose classification is clause, and selects the node as the current node. When a result of the 13th instruction is false, the processing returns to the 12th instruction.

The 14th instruction searches for a node whose vertical position is immediately below the current node, whose horizontal position is on the right side of the clause of the 11th instruction, and whose type is predicate phrase, and selects the node as the current node. The 15th instruction searches for a node whose vertical position is immediately below the current node, whose horizontal position is on the right side of SELECT of the 12th instruction, and whose classification is expression, and selects the node as the current node. When a result of the 15th instruction is false, the processing returns to the 14th instruction. The 16th instruction searches for a node whose vertical position is immediately below the current node, whose horizontal position is on the right side of the clause of the 13th instruction, and whose classification is expression, and selects the node as the current node. When a result of the 16th instruction is false, the processing returns to the 15th instruction.

The 17th instruction searches for the node 152b whose vertical position is immediately below the current node, whose horizontal position is on the right side of the predicate phrase of the 14th instruction, whose type is data type, and whose value is NUMBER, and selects the node as the current node. When a result of the 17th instruction is false, the processing returns to the 16th instruction. The 18th instruction deletes the current node. The 19th instruction generates a new node whose type is data type and whose value is NUMERIC, and inserts the new node at the position of the deleted node.

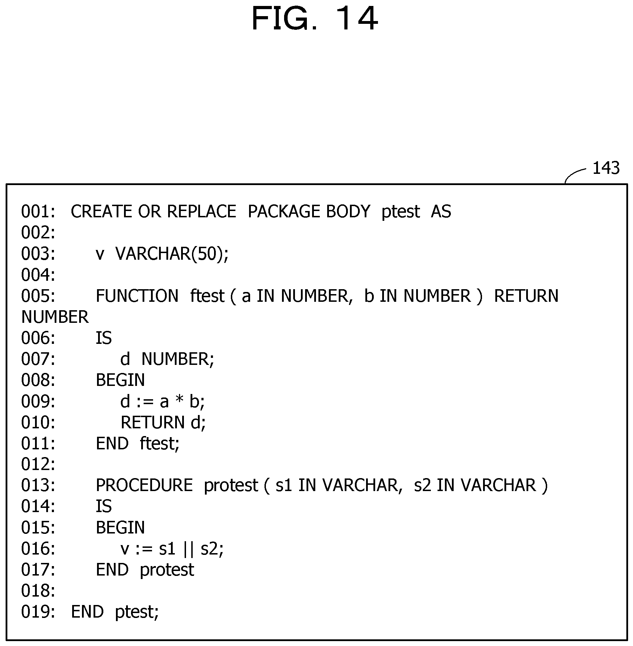

FIG. 14 is a diagram illustrating an example of the source code of an SQL procedure.

Here, the syntax of SQL procedure code will be described. A database product may define SQL procedure language for describing a set of data processing so that a user program may simply request complicated data processing. However, in many cases, SQL procedure language has a grammar similar to that of SQL. Accordingly, the information processing device 100 defines a common syntax rule including the syntax of SQL and the syntax of SQL procedure language after adding a language element specific to SQL procedure language.

In addition to the previously-described language elements of SQL, SQL procedure code includes a control statement, a section, a block, and a module as language elements. A control statement is a statement representing a control structure such as a conditional branch or a loop. A control statement includes words or phrases for control such as IF, WHEN, IN, THEN, ELSE, END IF, LOOP, and END LOOP. A section is an area in the source code sandwiched by specific keywords, and is included in a block. Words indicating the start or end of a section include DECLARE, BEGIN, EXCEPTION, END, AS, IS, and the like.

A block is an area in the source code including one or more sections or blocks. A block includes a FUNCTION block, a PROCEDURE block, an unnamed block to which a block name is not given, and the like. A module is a unit representing the entire source code. One module corresponds to one physical file. The language type of the source code is determined based on the extension of a file name or the declaration at the head of the source code. The language type is SQL or SQL procedure language.

Boundaries of control statement, section, block, and module are determined by specific keywords. However, it is considered that end of file (EOF) is included at the end of the source code. For example, an area from IF to END IF or an area from DECLARE to BEGIN is extracted from the source code. In a syntax tree, a keyword at the head of an area is assigned to a node representing a control statement, a section, a block, or a module. Under the node, language elements before the next keyword appears are expanded.

Source code 143 includes SQL procedure code. The source code 143 is source code of 19 lines including empty lines. AS in the first line is a keyword indicating the start of a section. However, the character string before AS is not completed as a statement. Accordingly, the information processing system interpolates a terminal symbol immediately before AS for interpretation as one statement, v VARCHAR(50) in the third line is a definition phrase, but it is not used as a part of a clause including an instruction word. Accordingly, the information processing system interprets that the instruction word DECLARE is omitted when a clause including a definition phrase does not explicitly appear in the source code.

FUNCTION in the fifth line is a keyword indicating the start of a block. RETURN NUMBER in the fifth line does not include a phrase following the instruction word. Accordingly, the information processing system interpolates To Be Determined (TBD) after the data type, and interprets as a clause in which a phrase including the data type and a value follows the instruction word. BEGIN in the eighth line is a keyword indicating the start of a section. RETURN d; in the tenth line does not include a phrase following the instruction word. Accordingly, the information processing system interpolates Established (EST) indicating that a data type has been defined, and interprets as a clause in which a phrase including the data type and a value follows the instruction word.

END in the 11th line is a keyword indicating a break between sections. However, after END, the name of the FUNCTION block and a terminal symbol follow. Accordingly, the information processing system interprets that a clause including an END instruction is omitted in the END section, and interpolates such clause. Furthermore, the information processing system interpolates EST, and interprets that a phrase including the data type and the name of FUNCTION follows the END instruction. PROCEDURE in the 13th line is a keyword indicating the start of a block. Also for BEGIN in the 15th line, END protest in the 17th line, and END ptest; in the 19th line, the information processing system interprets similarly to the above.

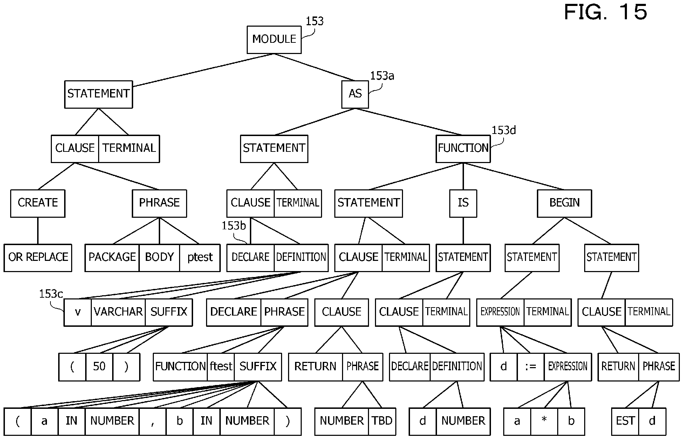

FIG. 15 is a diagram illustrating a third example of a syntax tree.

A syntax tree 153 indicates the syntax of the source code 143. The syntax tree 153 includes nodes 153a, 153b, 153c, 153d, 153e, and 153f. The node 153a represents the AS section that starts from the first line of the source code 143. The node 153b represents the instruction word DECLARE interpolated in the third line of the source code 143. The node 153c represents the variable v described in the third line of the source code 143. The node 153d represents the FUNCTION block that starts from the fifth line of the source code 143.

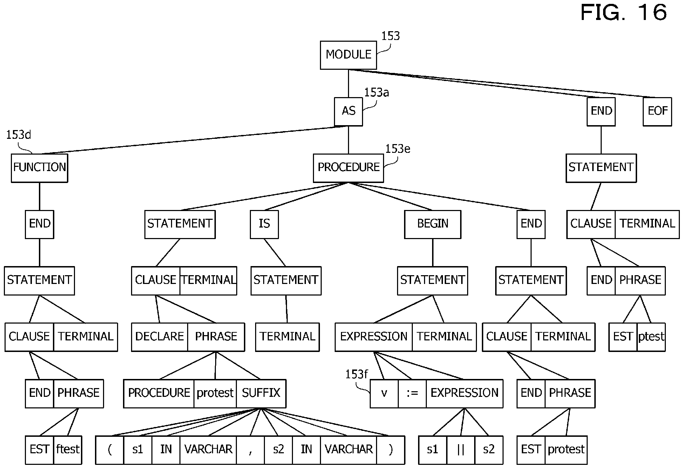

FIG. 16 is a diagram illustrating the third example of a syntax tree (continued).

The node 153e represents the PROCEDURE block that starts from the 13th line of the source code 143. The node 153f represents the variable v described in the 16th line of the source code 143. The node 153f means a reference to the variable v defined in the node 153c.

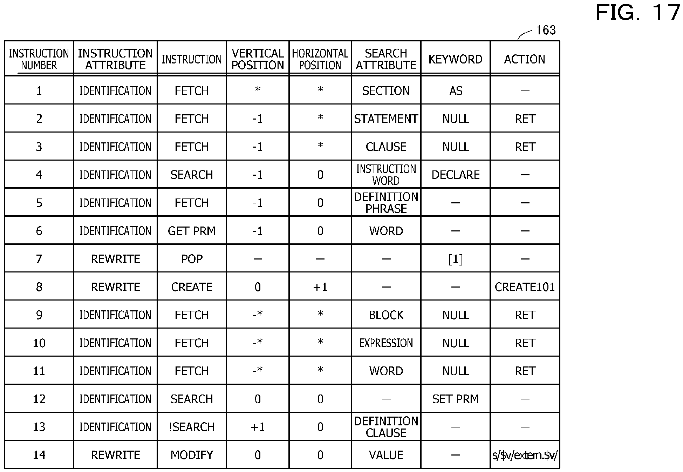

FIG. 17 is a diagram illustrating a third example of incompatibility information.

Incompatibility information 163 is an example of incompatibility information applied to the syntax tree 153 in FIGs. 15 and 16. Here, a case is considered in which, in the source code 143, the description method of declaring the variable v outside the FUNCTION block and the PROCEDURE block is incompatible, and the incompatibility is resolved by inserting the modifier "extern", indicating an external variable, before the variable name.

In a case where an AS section includes two or more blocks and a variable is declared outside the two or more blocks, the database product before change interprets the variable as a global variable (external variable) that may be commonly used in the two or more blocks. On the other hand, the database product after change interprets a variable that is not explicitly declared as an external variable as a local variable (internal variable). Therefore, incompatibility exists between the nodes 153c and 153f of the syntax tree 153. This incompatibility is resolved by inserting a node indicating the modifier extern before the node 153c and rewriting the variable name of the node 153f to extern. v.

However, in a case where an internal variable having the same variable name is defined in the PROCEDURE block, the variable v indicated by the node 153f does not indicate the external variable defined by the node 153c, but indicates an internal variable. Accordingly, rewriting of the variable name of the node 153f is executed only when an internal variable having the same variable name is not defined in the PROCEDURE block.

The incompatibility information 163 includes 14 instructions of the first instruction to the 14th instruction. The first instruction to the sixth instruction are identification instructions for searching for a variable declaration outside a block, and the seventh instruction to the eighth instruction are rewrite instructions for rewriting the variable declaration. The ninth instruction to the 13th instruction are identification instructions for searching for a variable reference in a block, and the 14th instruction is a rewrite instruction for rewriting the variable reference.

The first instruction searches the syntax tree 153 for the node 153a whose classification is section and whose value is AS, and selects the node as the current node. The second instruction searches for a node whose vertical position is immediately below the current node and whose classification is statement, and selects the node as the current node. The third instruction searches for a node whose vertical position is immediately below the current node and whose classification is clause, and selects the node as the current node. When a result of the third instruction is false, the processing returns to the second instruction.

The fourth instruction searches for the node 153b that is a node directly below the current node, whose type is instruction word, and whose value is DECLARE. When a result of the fourth instruction is false, the processing returns to the third instruction. The fifth instruction searches for a node that is a node directly below the current node and whose type is definition phrase, and selects the node as the current node. The sixth instruction searches for the node 153c that is a node directly below the current node and whose type is word, and saves the value of the node 153c.

The seventh instruction returns the current node to the node 153a selected in the first instruction. The eighth instruction inserts a subtree designated by the CREATE information number to the left side of the current node.

The ninth instruction searches for the nodes 153d and 153e whose vertical position is below the current node and whose classification is block, and selects the nodes as the current nodes. The tenth instruction searches for a node whose vertical position is below the current nodes and whose classification is expression, and selects the node as the current node. When a result of the tenth instruction is false, the processing returns to the ninth instruction. The 11th instruction searches for the node 153f whose vertical position is below the current node and whose classification is word, and selects the node as the current node. When a result of the 11th instruction is false, the processing returns to the tenth instruction. The 12th instruction determines whether the value of the current node agrees with the variable name saved in the sixth instruction. When a result of the 12th instruction is false, the processing returns to the 11th instruction.

The 13th instruction confirms that there is no node whose vertical position is immediately above the current node and whose type is definition clause. The 14th instruction rewrites the value of the current node in accordance with the regular expression program designated by the action. Here, extern is inserted at the head of the variable name.

As described above, an incompatible portion is searched for from a syntax tree. However, since a syntax tree may have a nested structure such as a subquery, there is a possibility that a search becomes complicated and the amount of calculation increases. Furthermore, there is a possibility that incompatibility information becomes complicated, and there is a possibility that the burden of creation and management of incompatibility information increases. Accordingly, the information processing system limits the search range from the anchor. In a case where a child node of a certain node has a classification that is grammatically equal to or higher than the level of the node (for example, a phrase or clause for a phrase), the child node is excluded from the search range. Furthermore, in a case where a parent node of a certain node has a classification that is grammatically equal to or lower than the level of the node (for example, a clause or phrase for a clause), the parent node is excluded from the search range.

Therefore, even in a case where incompatibility information instructs a search in the upward direction, when the classification of a parent node is equal to or lower than the classification of the current node, the information processing system stops the search in the upward direction. Furthermore, even in a case where incompatibility information instructs a search in the downward direction, when the classification of a child node is equal to or higher than the classification of the current node, the information processing system stops the search in the downward direction.

Furthermore, even in a case where incompatibility information instructs a search in the rightward direction, when a known keyword that is beyond the instruction range to which the current node belongs is detected, the information processing system stops the search in the rightward direction. Similarly, even in a case where incompatibility information instructs a search in the leftward direction, when a known keyword that is beyond the instruction range to which the current node belongs is detected, the information processing system stops the search in the leftward direction.

Next, support for creation of incompatibility information by the editor 123 will be described.

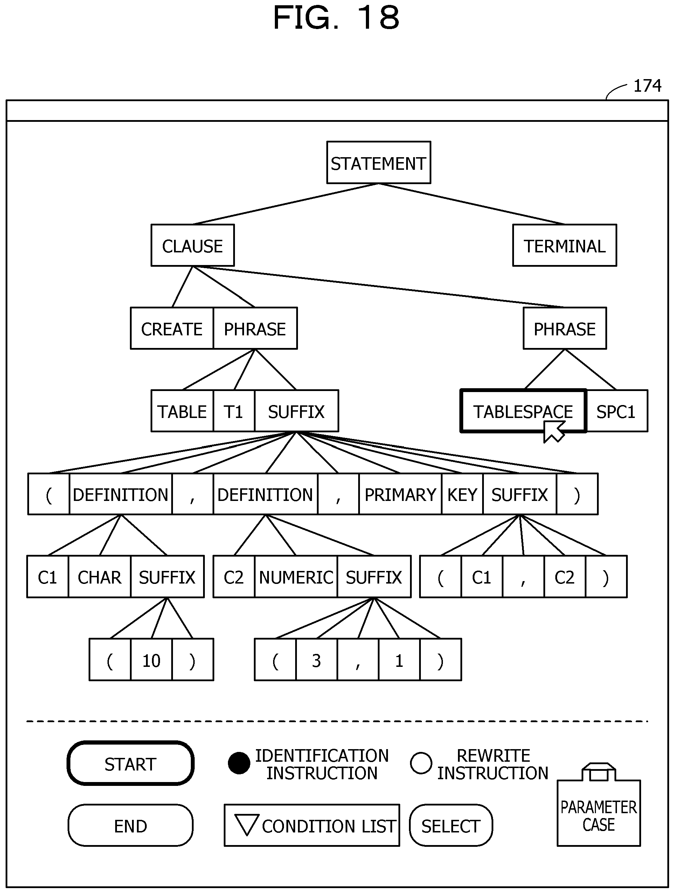

FIG. 18 is a diagram illustrating an example of an editor screen.

The editor 123 provides the terminal device 31 with an editor screen 174 as a user interface that supports creation of the incompatibility information 161. The terminal device 31 transmits the source code 141 to the editor 123. The editor 123 parses the source code 141 and generates the syntax tree 151, and generates the editor screen 174 including the syntax tree 151. The editor 123 transmits the editor screen 174 to the terminal device 31.

The terminal device 31 displays the editor screen 174. The terminal device 31 accepts operation for the editor screen 174. The operation for the editor screen 174 includes node selection of sequentially selecting nodes of interest from the syntax tree 151, and includes node deletion of deleting the selected node and node addition of inserting a node at a designated position. Furthermore, the operation for the editor screen 174 includes condition designation of selecting a defined search condition from a condition list. Furthermore, the operation for the editor screen 174 includes parameter saving of saving the attribute of the selected node in a parameter case, and parameter reading of using the attribute saved in the parameter case as a search condition.

The terminal device 31 transmits the accepted operation to the editor 123. The editor 123 generates identification instructions and rewrite instructions according to the received operation. For example, based on node selection of sequentially selecting nodes of the syntax tree 151, the editor 123 determines a path that follows the selected nodes with a single stroke. The editor 123 automatically generates FETCH instructions and SEARCH instructions from the attribute of each node on the path and the positional relationship of the nodes on the path.

The editor 123 transmits the generated identification instructions and rewrite instructions to the terminal device 31. The terminal device 31 displays the received identification instructions and rewrite instructions on the editor screen 174. Note that, a part or all of the parsing of the source code 141, the generation of the editor screen 174, the interpretation of the operation for the editor screen 174, and the generation of incompatibility information may be executed by the terminal device 31. The information processing device 100 may transmit a program corresponding to the editor 123 to the terminal device 31.

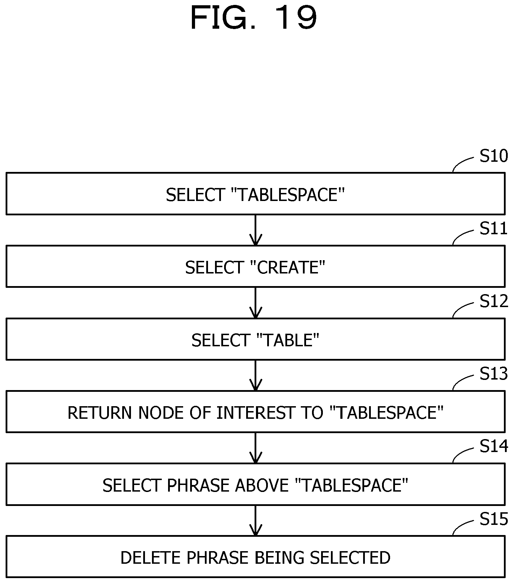

FIG. 19 is a diagram illustrating a first operation procedure example of the editor screen.

Here, an operation example for generating the incompatibility information 161 from the syntax tree 151 will be described. The terminal device 31 selects the node 151a including the keyword TABLESPACE (S10). Accordingly, the first instruction is generated. Next, the terminal device 31 selects the node 151b including the keyword CREATE (S11). Accordingly, a path from the node 151a reaching the node 151b is searched for, and the second instruction to the third instruction are generated.

Next, the terminal device 31 selects the node 151c including the keyword TABLE (S12). Accordingly, a path from the node 151b reaching the node 151c is searched for, and the fourth instruction to the fifth instruction are generated. Next, the terminal device 31 selects the node 151a again and returns the node of interest to the node 151a (S13). Accordingly, the sixth instruction is generated. Next, the terminal device 31 selects the node 151d indicating the TABLESPACE phrase (S14). Accordingly, the seventh instruction is generated. Finally, the terminal device 31 deletes the node 151d from the syntax tree 151 (S15). Accordingly, the eighth instruction is generated.

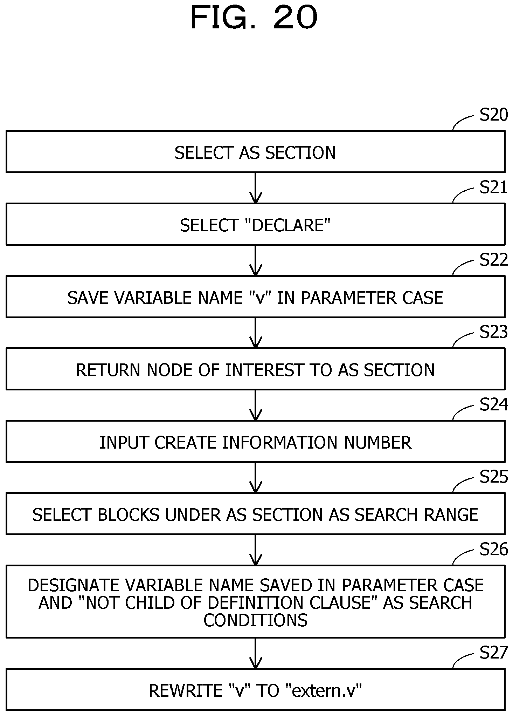

FIG. 20 is a diagram illustrating a second operation procedure example of the editor screen.

Here, an operation example for generating the incompatibility information 163 from the syntax tree 153 will be described. The terminal device 31 selects the node 153a indicating an AS section (S20). Accordingly, the first instruction is generated. Next, the terminal device 31 selects the node 153b including the keyword DECLARE (S21). Accordingly, a path from the node 153a reaching the node 153b is searched for, and the second instruction to the fourth instruction are generated.

Next, the terminal device 31 selects the node 153c indicating the variable name v, and saves the variable name v in the parameter case (S22). Accordingly, a path from the node 153b reaching the node 153c is searched for, the value of the node 153c is extracted, and the fifth instruction to the sixth instruction are generated. Next, the terminal device 31 selects the node 153a again and returns the node of interest to the node 153a (S23). Accordingly, the seventh instruction is generated.

Next, the terminal device 31 inserts a subgraph into the syntax tree 153 by inputting the CREATE information number indicating the subgraph created in advance (S24). Accordingly, the eighth instruction is generated. Next, the terminal device 31 selects the node 153d indicating a FUNCTION block and the node 153e indicating a PROCEDURE block as blocks under the AS section, and designates the lower side of the nodes 153d and 153e as a search range (S25).

Next, the terminal device 31 reads the variable name v from the parameter case, selects the search condition "not a child of a definition clause" from the condition list, and selects the node 153f indicating the variable name v (S26). Accordingly, the search method of searching for the node 153f from the search range is identified, and the ninth instruction to the 13th instruction are generated. Finally, the terminal device 31 rewrites the value of the node 153f from v to extern.v (S27). Accordingly, the 14th instruction is generated.

Next, automatic testing of incompatibility information by the test unit 125 will be described.

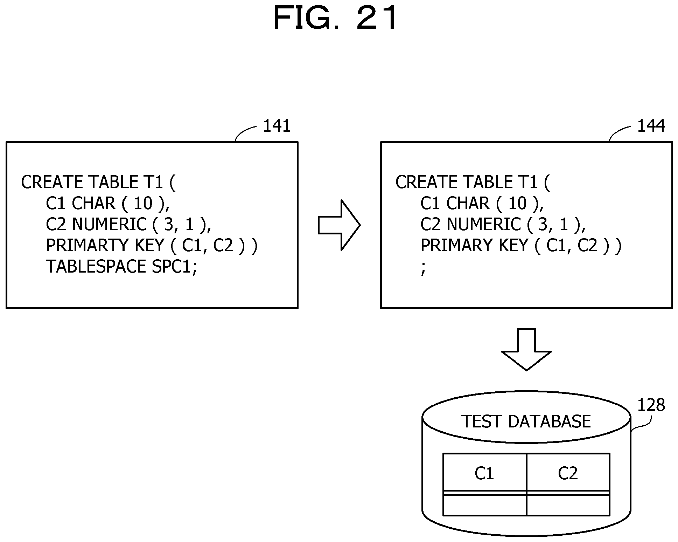

FIG. 21 is a diagram illustrating an example of testing of incompatibility information.

The test unit 125 reads the source code 141 from the sample code storage unit 121. The source code 141 is provided from the terminal device 31 together with the incompatibility information 161 in the prepared state. The source code 141 includes an SQL statement that requests to newly create a table T1 including columns C1 and C2. As described previously, the source code 141 includes a TABLESPACE phrase that is incompatible with the database product after change.

The test unit 125 parses the source code 141 and generates the syntax tree 151, and executes a series of instructions included in the incompatibility information 161 for the syntax tree 151, thereby converting the source code 141 into source code 144. As in the case of the source code 141, the source code 144 includes an SQL statement that requests to newly create a table T1 including columns C1 and C2. However, the source code 144 does not include a TABLESPACE phrase.

The test unit 125 transmits the SQL statement included in the source code 144 to a test database 128 and executes the SQL statement, and extracts an execution result from the test database 128. The test database 128 is a database product after change assumed by the incompatibility information, and is installed in the information processing device 100 or another information processing device in advance.

The test unit 125 reads a correct execution result from the sample code storage unit 121, compares the current execution result extracted from the test database 128 with the correct execution result, and determines whether both agree. The correct execution result is provided from the terminal device 31 together with the source code 141. The correct execution result corresponding to the source code 141 is that an empty table T1 including columns C1 and C2 is generated.

When the current execution result and the correct execution result agree, the test unit 125 determines that the incompatibility information 161 operates correctly. On the other hand, when the current execution result and the correct execution result do not agree, the test unit 125 determines that the incompatibility information 161 does not operate correctly and there is a failure in the incompatibility information 161. Note that, in a case where the correct execution result is not provided from the terminal device 31, the test unit 125 transmits the current execution result to the terminal device 31, and receives a result of determining whether or not the current execution result is correct from the terminal device 31.

Next, identity determination of incompatibility information by the identity determination unit 126 will be described.

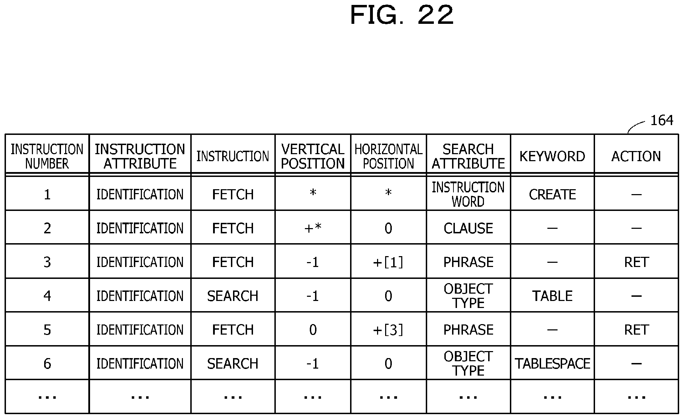

FIG. 22 is a diagram illustrating a fourth example of incompatibility information.

Incompatibility information 164 may detect the same incompatible portion as that of the incompatibility information 161. However, the pieces of incompatibility information 161 and 164 include different identification instructions since the search procedures are different. The incompatibility information 164 includes six instructions of the first instruction to the sixth instruction as identification instructions.

The first instruction searches the syntax tree 151 for the node 151b whose type is instruction word and whose value is CREATE, and selects the node as the current node. The second instruction searches for a node whose vertical position is above the current node and whose classification is clause, and selects the node as the current node. The third instruction searches for a node whose vertical position is immediately below the current node, whose horizontal position is on the right side of CREATE of the first instruction, and whose classification is phrase, and selects the node as the current node. The fourth instruction searches for the node 151c that is a node directly below the current node, whose type is object type, and whose value is TABLE.

The fifth instruction searches for the node 151d whose horizontal position is on the right side of the TABLE phrase of the third instruction and whose classification is phrase, and selects the node as the current node. The sixth instruction searches for the node 151a that is a node directly below the current node, whose type is object type, and whose value is TABLESPACE. As described above, since the anchor that is the starting point of a search depends on the subjectivity of a creator of incompatibility information, a plurality of pieces of incompatibility information that may detect the same incompatible portion may be created.

Accordingly, the identity determination unit 126 determines the substantial identity between existing incompatibility information and incompatibility information in the prepared state. The information processing device 100 may reject registration of incompatibility information determined to be substantially the same as existing incompatibility information. Accordingly, the information processing device 100 may reduce the redundancy of knowledge database and efficiently manage incompatibility information. Furthermore, the information processing device 100 may regard the existing incompatibility information determined to be substantially the same as the incompatibility information in the prepared state as being found again and used by another person, and count it as a use result of existing incompatibility information. Accordingly, the information processing device 100 may appropriately evaluate the value of each piece of incompatibility information.

In determining the substantial identity, the identity determination unit 126 generates a BOW vector from each piece of incompatibility information as follows. The BOW vector of existing incompatibility information may be saved in the incompatibility information storage unit 122 together with the incompatibility information.

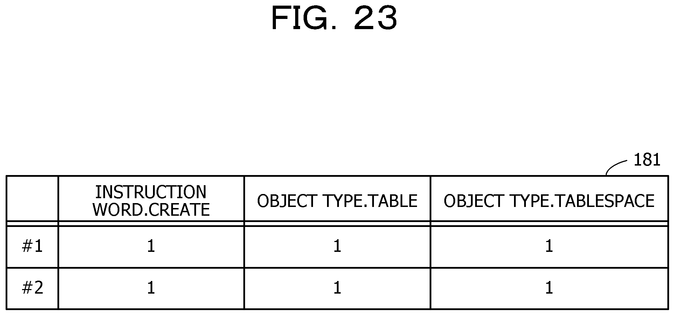

FIG. 23 is a diagram illustrating an example of a BOW vector table.

The identity determination unit 126 extracts instructions including a keyword from the incompatibility information, and extracts a pair of a search attribute and a keyword from each extracted instruction. The identity determination unit 126 counts the number of times of appearance of the same pair, and generates a BOW vector in which the numbers of times of appearances are enumerated. One element of the BOW vector indicates the number of times of appearance of a certain pair. However, the identity determination unit 126 may calculate an appearance probability of the same pair by adjustment such as dividing the number of times of appearance by the number of instructions in the incompatibility information, and generate a BOW vector in which appearance probabilities are enumerated.

Accordingly, the identity determination unit 126 generates a BOW vector table 181. The BOW vector table 181 includes the BOW vectors of the pieces of incompatibility information 161 and 164. For the incompatibility information 161, the identity determination unit 126 extracts (object type, TABLESPACE) from the first instruction, (instruction word, CREATE) from the third instruction, and (object type, TABLE) from the fifth instruction. Furthermore, for the incompatibility information 164, the identity determination unit 126 extracts (instruction word, CREATE) from the first instruction, (object type, TABLE) from the fourth instruction, and (object type, TABLESPACE) from the sixth instruction.

Therefore, by assigning the first element to (instruction word, CREATE), the second element to (object type, TABLE), and the third element to (object type, TABLESPACE), the identity determination unit 126 generates a BOW vector (1, 1, 1) from both of the pieces of incompatibility information 161 and 164.

The identity determination unit 126 calculates cosine similarity between the BOW vector of incompatibility information in the prepared state and the BOW vector of existing incompatibility information. For example, cosine similarity is calculated by calculating a product for each of the same dimensions and adding up the products, and dividing the sum by the norm of two BOW vectors. The maximum value of cosine similarity is 1, meaning that the degree of similarity is higher as the value is closer to 1. The BOW vectors of the pieces of incompatibility information 161 and 164 are the same, and the cosine similarity therebetween is 1. When cosine similarity is equal to or smaller than a threshold, the identity determination unit 126 determines that the two pieces of incompatibility information are not similar and do not detect the same incompatible portion.

However, the above-described BOW vectors do not take the appearance order of keywords into consideration. For this reason, even when the cosine similarity of BOW vectors is equal to or smaller than the threshold, the two pieces of incompatibility information do not detect the same incompatible portion in some cases. For example, there is a possibility that the same BOW vector as that of the incompatibility information 161 is generated from the incompatibility information that detects the incompatible portion CREATE TABLESPACE from the SQL statement CREATE TABLESPACE SPC1 TABLE COMPRESSION::=();.

Accordingly, first, the identity determination unit 126 uses the above-described BOW vectors and narrows down the pieces of existing incompatibility information that have the possibility of being substantially the same as the incompatibility information in the prepared state. After that, the identity determination unit 126 compares, between the incompatibility information in the prepared state and the narrowed pieces of existing incompatibility information, the appearance orders of the keywords in the source code estimated from the incompatibility information, and finally determines the identity.

At this time, the identity determination unit 126 generates a keyword list from each piece of incompatibility information as follows. The keyword list of existing incompatibility information may be saved in the incompatibility information storage unit 122 together with the incompatibility information.

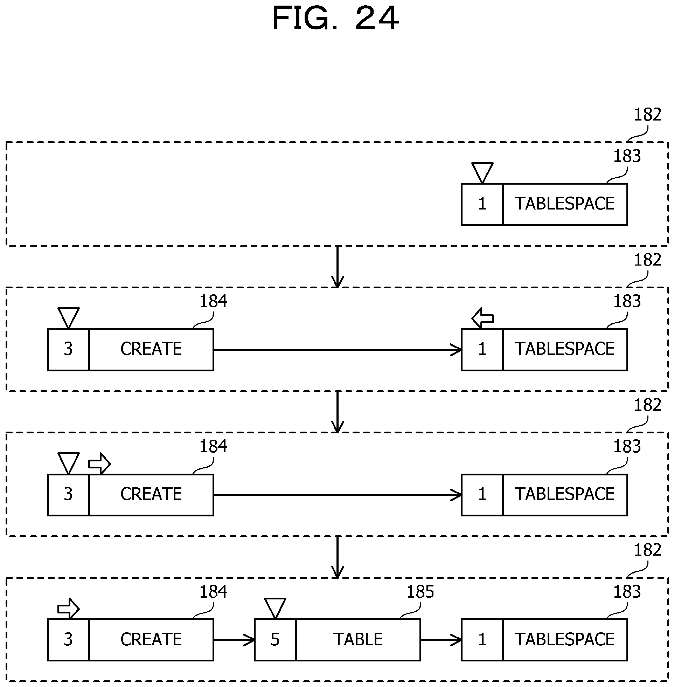

FIG. 24 is a diagram illustrating a first generation example of a keyword list.

The identity determination unit 126 extracts, from incompatibility information, keywords included in FETCH instructions and keywords included in SEARCH instructions. By tracking the horizontal positions of the instructions included in the incompatibility information, the identity determination unit 126 estimates the appearance order of the extracted two or more keywords in a case where the two or more keywords are included in the source code. Since the incompatibility information does not necessarily search for two or more keywords in the order from left to right in a syntax tree, the identity determination unit 126 estimates the appearance order based on the search range defined in the incompatibility information. The identity determination unit 126 generates a keyword list in which the keywords are arranged in the order of appearance.

The identity determination unit 126 generates a keyword list 182 from the incompatibility information 161. First, the identity determination unit 126 extracts the keyword TABLESPACE from the first instruction, and generates a node 183 indicating TABLESPACE. Next, the identity determination unit 126 determines that the position of the next node is on the left side of the node 183 based on the horizontal position of the second instruction. Next, the identity determination unit 126 extracts the keyword CREATE from the third instruction, and generates a node 184 indicating CREATE.

Next, the identity determination unit 126 determines that the position of the next node is between the node 183 and the node 184 based on the horizontal position of the fourth instruction. Finally, the identity determination unit 126 extracts the keyword TABLE from the fifth instruction, and generates a node 185 indicating TABLE. Accordingly, the keyword list 182 in which the keywords are arranged in the order of CREATE, TABLE, and TABLESPACE is generated.

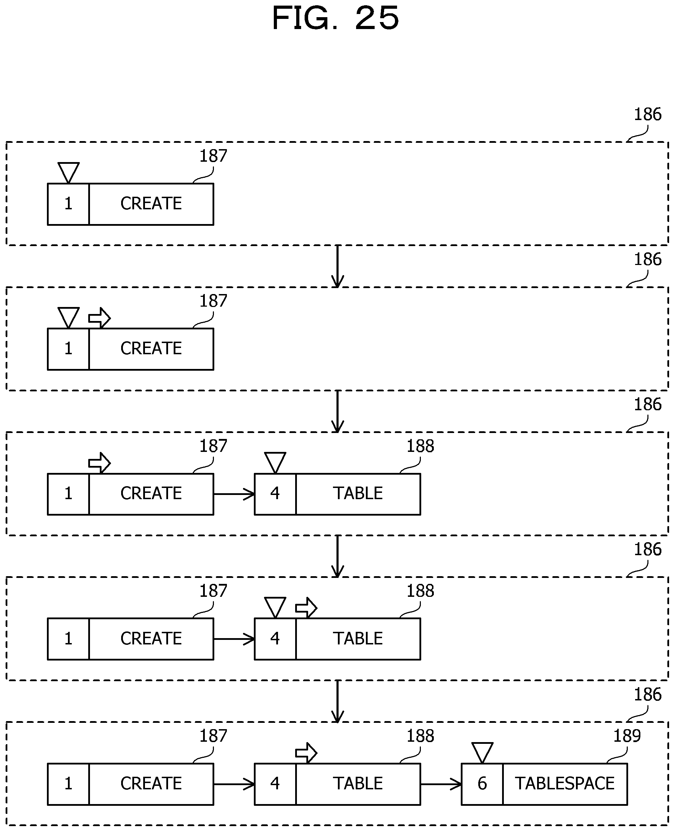

FIG. 25 is a diagram illustrating a second generation example of a keyword list.

The identity determination unit 126 generates a keyword list 186 from the incompatibility information 164. First, the identity determination unit 126 extracts the keyword CREATE from the first instruction, and generates a node 187 indicating CREATE. Next, the identity determination unit 126 determines that the position of the next node is on the right side of the node 187 based on the horizontal position of the third instruction. Next, the identity determination unit 126 extracts the keyword TABLE from the fourth instruction, and generates a node 188 indicating TABLE.

Next, the identity determination unit 126 determines that the position of the next node is on the right side of the node 188 based on the horizontal position of the fifth instruction. Finally, the identity determination unit 126 extracts the keyword TABLESPACE from the sixth instruction, and generates a node 189 indicating TABLESPACE. Accordingly, the keyword list 186 in which the keywords are arranged in the order of CREATE, TABLE, and TABLESPACE is generated.

The identity determination unit 126 calculates the degree of similarity between two keyword lists. For example, the identity determination unit 126 calculates an edit distance of keyword lists. The identity determination unit 126 calculates a minimum value of the number of times of operation of insertion, deletion, and replacement of a keyword for converting one keyword list into the other keyword list. Furthermore, for example, the identity determination unit 126 calculates a Euclidean distance of keyword lists. The identity determination unit 126 defines the degree of similarity between different keywords in advance, and calculates a root sum square or a root mean square of the degree of similarity between keywords at the same position in a keyword list.

Note that, a method of calculating the degree of similarity between documents in consideration of the appearance order of keywords is also described in the following literature, for example. Fumito Konaka, Takao Miura, "Proposal of Semantic Similarity Method in Consideration of Arrangement of Words", the 7th Forum on Data Engineering and Information Management (DEIM2015), A2-6, March 2, 2015.

When the degree of similarity between the keyword lists is equal to or smaller than a threshold, the identity determination unit 126 determines that the two pieces of incompatibility information are not similar and do not detect the same incompatible portion. On the other hand, when the degree of similarity between the keyword lists exceeds the threshold, the identity determination unit 126 determines that there is a possibility that the two pieces of incompatibility information are similar and detect the same incompatible portion. In this respect, the keyword lists 182 and 186 are the same. Therefore, the identity determination unit 126 determines that the pieces of incompatibility information 161 and 164 are substantially the same.

Next, division of incompatibility information into pieces of incompatibility sub-information will be described. Incompatibility information may search for and rewrite a plurality of nodes at separate positions in a syntax tree in relation to the same incompatibility. In such case, the incompatibility information may include a plurality of sets of a column of identification instructions and a column of rewrite instructions. Such plurality of instruction sets may be reusable separately from each other, and a certain instruction set may be used for another piece of incompatibility information.

Accordingly, the information processing device 100 extracts incompatibility sub-information from the incompatibility information as a reusable instruction set. The identity determination unit 126 determines the identity in units of incompatibility sub-information in addition to the identity of the entire incompatibility information received from the terminal device 31.

As an example of incompatibility information including a plurality of pieces of incompatibility sub-information, like the incompatibility information 162 illustrated in FIGs. 12 and 13, there is a syntax tree having a nested structure that includes an instruction set of searching for a certain subtree and an instruction set of searching for another subtree. As described previously, a search in a syntax tree limits the search range in the vertical direction based on the classification level of each node, and limits the search range in the horizontal direction based on the keyword of each node. Accordingly, incompatibility information that searches a nested structure may be divided into a plurality of pieces of incompatibility sub-information.

However, the rearward instruction set included in the incompatibility information may perform a search with the node detected in the forward instruction set as a base point by a POP instruction. In evaluating the rearward instruction set as reusable incompatibility sub-information, it is preferable to exclude an identification instruction dependent on the forward instruction set. Accordingly, the identity determination unit 126 not only simply divides incompatibility information but may also change some instructions.

Furthermore, as an example of incompatibility information including a plurality of pieces of incompatibility sub-information, as in the incompatibility information 163 illustrated in FIG. 17, there is incompatibility information in which parameters are taken over from the forward instruction set to the rearward instruction set by using a GET PRM instruction and a SET PRM instruction. From such incompatibility information, a plurality of different reusable instruction ranges may be extracted according to the mode of connection between instruction sets using a GET PRM instruction. Therefore, a plurality of pieces of incompatibility sub-information may be extracted from incompatibility information.

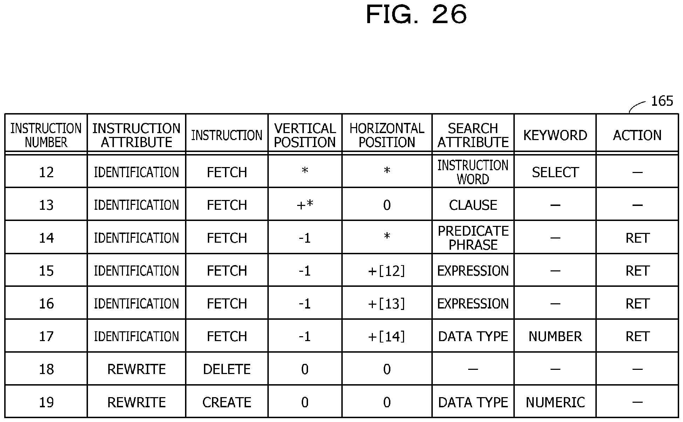

FIG. 26 is a diagram illustrating an extraction example of incompatibility sub-information.

Incompatibility sub-information 165 is the second incompatibility sub-information extracted from the incompatibility information 162. The first incompatibility sub-information extracted from the incompatibility information 162 is the same as the first instruction to the sixth instruction of the incompatibility information 162. The identity determination unit 126 detects, from the incompatibility information 162, the boundary at which the instruction attribute is switched from rewrite instruction to identification instruction. The identity determination unit 126 divides the instruction set before and after the boundary.

However, the seventh instruction of the incompatibility information 162 is a POP instruction of returning the current node to the first SELECT detected in the first instruction. The eighth instruction to the 12th instruction of the incompatibility information 162 are instructions of searching for the second SELECT with the first SELECT as a base point. For this reason, the seventh instruction to the 19th instruction of the incompatibility information 162 are dependent on the first incompatibility sub-information, and it is difficult to evaluate the seventh instruction to the 19th instruction themselves as independent incompatibility sub-information.

Accordingly, the identity determination unit 126 replaces the instruction string dependent on the previous instructions after the boundary with an anchor search instruction that is not dependent on the previous instructions. Specifically, in a case where there is a POP instruction immediately after the boundary, the identity determination unit 126 replaces the section from the POP instruction to a FETCH instruction or a SEARCH instruction designating a keyword with a FETCH instruction designating the keyword.

Here, the identity determination unit 126 deletes the seventh instruction to the 12th instruction of the incompatibility information 162, and instead adds a FETCH instruction of searching for a node whose type is instruction word and whose value is SELECT. The 13th instruction to the 19th instruction of the incompatibility information 162 are used as they are. Accordingly, the identity determination unit 126 generates the incompatibility sub-information 165 including eight instructions.

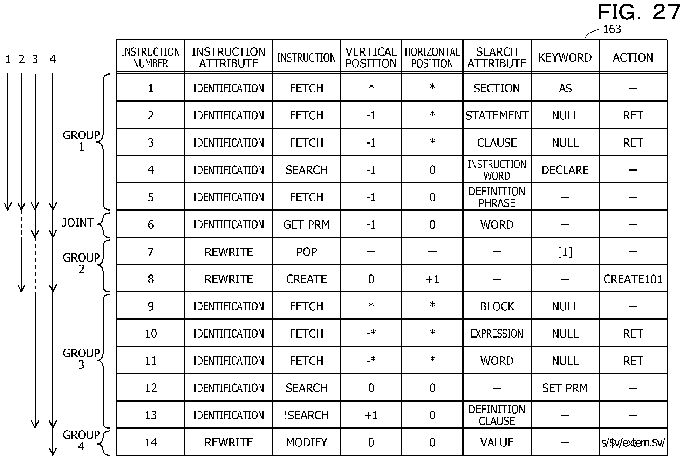

FIG. 27 is a diagram illustrating a division example of incompatibility information.

From the incompatibility information 163, incompatibility sub-information is extracted as follows. The identity determination unit 126 divides the 14 instructions included in the incompatibility information 163 into four instruction groups and a JOINT instruction according to the instruction attribute and a GET PRM instruction.

The identity determination unit 126 separates the GET PRM instruction as the JOINT instruction. Furthermore, the identity determination unit 126 extracts the first instruction to the fifth instruction, which are consecutive identification instructions, as instruction group #1, and extracts the seventh instruction to the eighth instruction, which are consecutive rewrite instructions, as instruction group #2. Furthermore, the identity determination unit 126 extracts the ninth instruction to the 13th instruction, which are consecutive identification instructions, as instruction group #3, and extracts the 14th instruction, which is a rewrite instruction, as instruction group #4.

The identity determination unit 126 determines a combination of reusable instruction groups based on the position of the JOINT instruction and the instruction attribute of each instruction group. Here, the identity determination unit 126 adopts instruction group #1 as one piece of incompatibility sub-information. This incompatibility sub-information searches for a definition phrase under the AS section. Furthermore, the identity determination unit 126 adopts the combination of instruction groups #1 and #2 as one piece of incompatibility sub-information. This incompatibility sub-information searches for and rewrites a definition phrase under the AS section.

Furthermore, the identity determination unit 126 adopts the combination of instruction group #1, the JOINT instruction, and instruction group #3 as one piece of incompatibility sub-information. This incompatibility sub-information searches for a definition phrase under the AS section, and further searches for a reference to a variable defined by the definition phrase. Furthermore, the identity determination unit 126 adopts the combination of instruction group #1, the JOINT instruction, and instruction groups #2 to #4 as one piece of incompatibility sub-information. This incompatibility sub-information is the incompatibility information 163 itself. As described above, the identity determination unit 126 extracts, from incompatibility information including a GET PRM instruction, a substantially meaningful combination of instruction groups as incompatibility sub-information.

Next, a processing procedure of the information processing device 100 will be described.

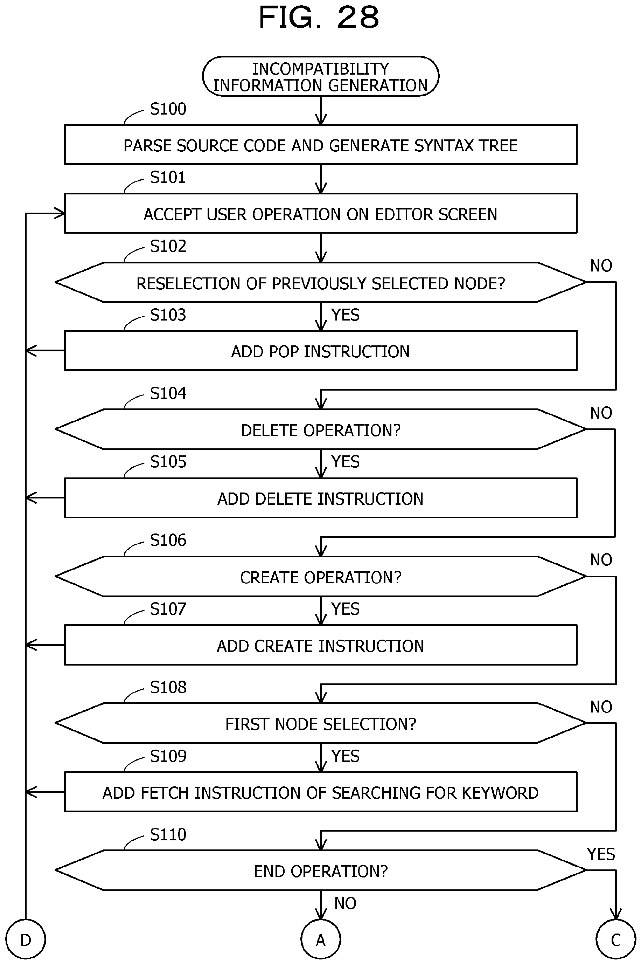

FIG. 28 is a flowchart illustrating a procedure example of incompatibility information generation.

(S100) The editor 123 parses the source code and generates a syntax tree.

(S101) The editor 123 accepts user operation on the editor screen.

(S102) The editor 123 determines whether the user operation is reselection of a node that has been previously selected. When the user operation is reselection of a previously selected node, the processing proceeds to step S103, and in other cases, the processing proceeds to step S104.

(S103) The editor 123 generates a POP instruction and adds the POP instruction to the incompatibility information. This POP instruction includes no vertical position, no horizontal position, and no search attribute, includes the instruction number of previous node selection as the keyword, and includes no action. Then, the processing returns to step S101.

(S104) The editor 123 determines whether the user operation is DELETE operation of deleting a node. When the user operation is DELETE operation, the processing proceeds to step S105, and in other cases, the processing proceeds to step S106.

(S105) The editor 123 generates a DELETE instruction and adds the DELETE instruction to the incompatibility information. This DELETE instruction includes -* as the vertical position and * as the horizontal position, and includes no search attribute, no keyword, and no action. Then, the processing returns to step S101.

(S106) The editor 123 determines whether the user operation is CREATE operation in which a CREATE information number is designated. When the user operation is CREATE operation, the processing proceeds to step S107, and in other cases, the processing proceeds to step S108.

(S107) The editor 123 generates a CREATE instruction and adds the CREATE instruction to the incompatibility information. This CREATE instruction includes the designated position as the vertical position and the designated position as the horizontal position, includes no search attribute and no keyword, and includes a CREATE information number as the action. Then, the processing returns to step S101.

(S108) The editor 123 determines whether the user operation is the first selection of a node from the syntax tree. When the user operation is the first node selection, the processing proceeds to step S109, and in other cases, the processing proceeds to step S110.

(S109) The editor 123 acquires a keyword of the selected node, generates a FETCH instruction indicating an anchor search of searching for the acquired keyword, and adds the FETCH instruction to the incompatibility information. This FETCH instruction includes * as the vertical position, * as the horizontal position, the attribute of the selected node as the search attribute, and the keyword of the selected node as the keyword, and includes no action. Then, the processing returns to step S101.

(S110) The editor 123 determines whether the user operation is end operation of ending the creation of incompatibility information. When the user operation is end operation, the processing proceeds to step S131, and in other cases, the processing proceeds to step S111.

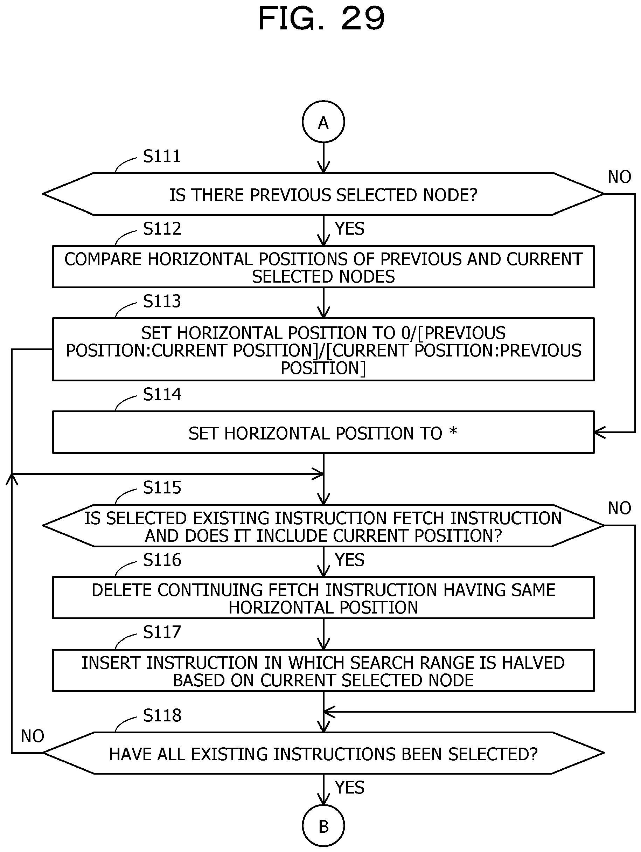

FIG. 29 is a flowchart illustrating the procedure example of incompatibility information generation (continued 1).

(S111) The editor 123 determines whether there exists a node selected by previous user operation. When there exists the previous selected node, the processing proceeds to step S112, and in other cases, the processing proceeds to step S114.

(S112) The editor 123 compares the horizontal position of the previous selected node in the syntax tree with the horizontal position of the current selected node in the syntax tree.

(S113) When the previous horizontal position and the current horizontal position are the same, the editor 123 sets the search range in the horizontal direction (search horizontal position) to 0. When the current horizontal position is larger than the previous horizontal position, the editor 123 sets the search horizontal position to [previous position:current position]. When the previous horizontal position is larger than the current horizontal position, the editor 123 sets the search horizontal position to [current position:previous position]. Then, the processing proceeds to step S115.

(S114) The editor 123 sets the search horizontal position to *.

(S115) The editor 123 selects, preferentially from the head, one of the generated existing instructions included in the incompatibility information. The editor 123 determines whether the selected existing instruction is a FETCH instruction and the search horizontal position of the FETCH instruction includes the horizontal position of the current selected node. When the selected existing instruction is a FETCH instruction satisfying the above condition, the processing proceeds to step S116, and when the selected existing instruction is any other case, the processing proceeds to step S118.

(S116) The editor 123 deletes the selected existing instruction from the incompatibility information. Furthermore, the editor 123 also deletes, from the incompatibility information, a FETCH instruction that is an existing instruction continuing from the selected existing instruction and has the same search horizontal position as that of the selected existing instruction.

(S117) The editor 123 divides the search range of the deleted existing instruction into two based on the horizontal position of the current selected node. Instead of the deleted existing instruction, the editor 123 generates a new FETCH instruction having the divided search range and adds the new FETCH instruction to the incompatibility information.

(S118) The editor 123 determines whether all of the existing instructions included in the incompatibility information have been selected in step S115. When all of the existing instructions have been selected, the processing proceeds to step S119, and when there is an unselected existing instruction, the processing returns to step S115.

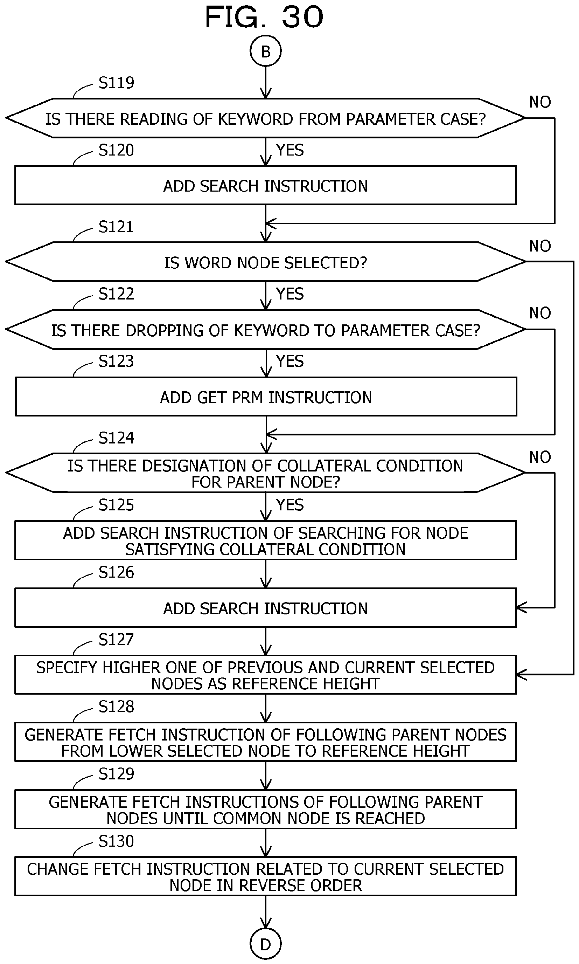

FIG. 30 is a flowchart illustrating the procedure example of incompatibility information generation (continued 2).

(S119) The editor 123 determines whether the user operation includes reading of a keyword from the parameter case. When the user operation includes reading of a keyword, the processing proceeds to step S120, and in other cases, the processing proceeds to step S121.

(S120) The editor 123 generates a SEARCH instruction and adds the SEARCH instruction to the incompatibility information. This SEARCH instruction includes -1 as the vertical position, * as the horizontal position, the attribute of the current selected node as the search attribute, and SET PRM as the keyword, and includes no action.

(S121) The editor 123 determines whether the user operation is selection of a word node whose classification is word. When the user operation is selection of a word node, the processing proceeds to step S122, and in other cases, the processing proceeds to step S127.

(S122) The editor 123 determines whether the user operation includes dropping of a keyword to the parameter case. When the user operation includes dropping of a keyword, the processing proceeds to step S123, and in other cases, the processing proceeds to step S124.

(S123) The editor 123 generates a GET PRM instruction of saving a keyword and adds the GET PRM instruction to the incompatibility information. This GET PRM instruction includes the designated position as the vertical position, 0 as the horizontal position, and word as the search attribute, and includes no keyword and no transaction.

(S124) The editor 123 determines whether a collateral condition has been designated by the user operation for the parent node of the current node. For example, a collateral condition is selected from the condition list of the editor screen. When a collateral condition has been designated, the processing proceeds to step S125, and when a collateral condition has not been designated, the processing proceeds to step S126.

(S125) The editor 123 generates a SEARCH instruction of searching for a node satisfying the collateral condition, and adds the SEARCH instruction to the incompatibility information. This SEARCH instruction includes +1 as the vertical position, * as the horizontal position, the attribute designated by the collateral condition as the search attribute, the keyword designated by the collateral condition as the keyword, and the action designated by the collateral condition as the action. However, in a case where the collateral condition is a negation expression that the corresponding node does not exist, the negation instruction ! is added before the SEARCH instruction.

(S126) The editor 123 generates a SEARCH instruction and adds the SEARCH instruction to the incompatibility information. This SEARCH instruction includes -1 as the vertical position, * as the horizontal position, the attribute of the selected node as the search attribute, and the value of the selected node as the keyword, and includes no action.

(S127) The editor 123 specifies, as a reference height, the height of the higher one (one closer to the root node) of the previous selected node and the current selected node in the syntax tree.

(S128) The editor 123 generates a FETCH instruction of following the parents from the lower selected node of the previous selected node and the current selected node to the reference height. When the lower one is the previous selected node, the FETCH instruction includes +1 as the vertical position and * as the horizontal position, and includes no search attribute, no keyword, and no action. When the lower one is the current selected node, the FETCH instruction includes -1 as the vertical position, * as the horizontal position, and the attribute of the parent node as the search attribute, includes no keyword, and includes RET as the action.

(S129) The editor 123 generates FETCH instructions of further following the parents until the two nodes whose heights have agreed in step S128 reach the common node. The FETCH instruction of the previous selected node side includes +1 as the vertical position and + as the horizontal position, and includes no search attribute, no keyword, and no action. The FETCH instruction of the current selected node side includes -1 as the vertical position, * as the horizontal position, and the attribute of the parent node as the search attribute, includes no keyword, and includes RET as the action.

(S130) The editor 123 changes the FETCH instruction related to the current selected node among the FETCH instructions generated in steps S128 and S129 in the reverse order. The editor 123 adds the FETCH instruction after the order change to the incompatibility information. Then, the processing returns to step S101.

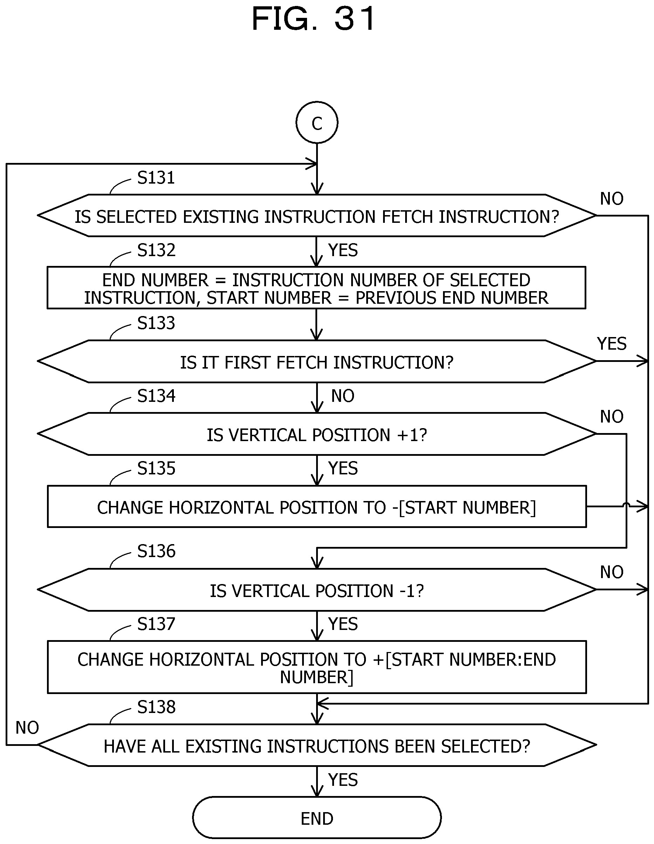

FIG. 31 is a flowchart illustrating the procedure example of incompatibility information generation (continued 3).

(S131) The editor 123 selects, preferentially from the head, one of the generated existing instructions included in the incompatibility information. The editor 123 determines whether the selected existing instruction is a FETCH instruction. When the selected existing instruction is a FETCH instruction, the processing proceeds to step S132, and when the selected existing instruction is not a FETCH instruction, the processing proceeds to step S138.

(S132) The editor 123 sets the instruction number of the currently selected FETCH instruction to the "end number", and sets the previous end number to the "start number".

(S133) The editor 123 determines whether the selected FETCH instruction is the first FETCH instruction in the incompatibility information. When it is the first FETCH instruction, the processing proceeds to step S138, and when it is the second or subsequent FETCH instruction, the processing proceeds to step S134.

(S134) The editor 123 determines whether the vertical position of the selected FETCH instruction is +1. When the vertical position of the selected FETCH instruction is +1, the processing proceeds to step S135, and in other cases, the processing proceeds to step S136.

(S135) The editor 123 changes the horizontal position of the selected FETCH instruction to - [start number]. Then, the processing proceeds to step S138.

(S136) The editor 123 determines whether the vertical position of the selected FETCH instruction is -1. When the vertical position of the selected FETCH instruction is -1, the processing proceeds to step S137, and in other cases, the processing proceeds to step S138.

(S137) The editor 123 changes the horizontal position of the selected FETCH instruction to +[start number:end number].

(S138) The editor 123 determines whether all of the existing instructions included in the incompatibility information have been selected in step S131. When all of the existing instructions have been selected, the incompatibility information generation ends, and when there is an unselected existing instruction, the processing returns to step S131.

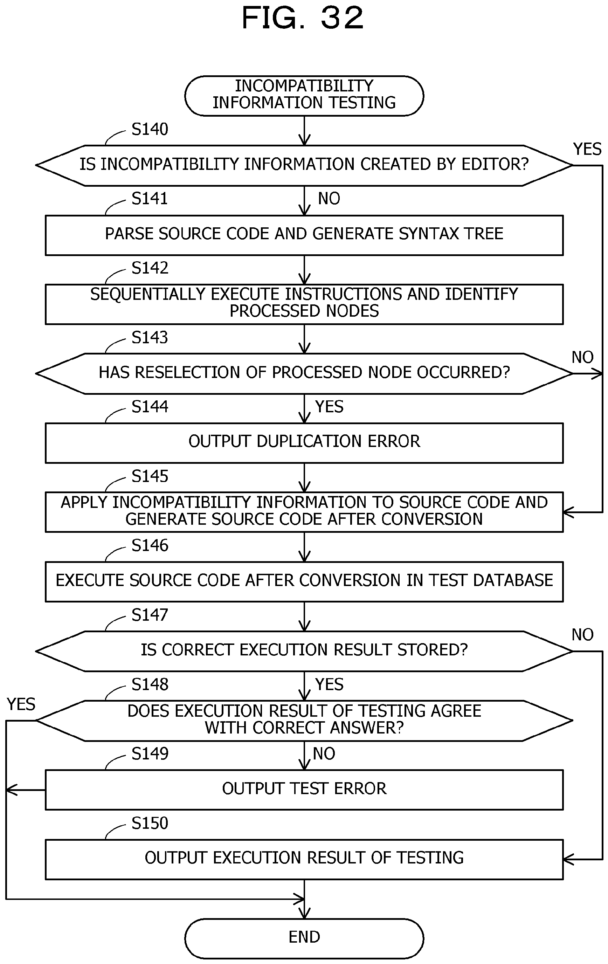

FIG. 32 is a flowchart illustrating a procedure example of incompatibility information testing.

(S140) The test unit 125 determines whether acquired incompatibility information is information created by using the editor 123. When it is incompatibility information created by the editor 123, the processing proceeds to step S145, and in other cases, the processing proceeds to step S141.

(S141) The test unit 125 parses the source code acquired together with the incompatibility information, and generates a syntax tree. The source code is provided by the creator of the incompatibility information.

(S142) The test unit 125 sequentially executes the instructions included in the incompatibility information for the syntax tree generated in step S141. At this time, the test unit 125 assigns a processed flag to the nodes that has become the processing targets of instruction, and identifies the processed nodes.

(S143) The test unit 125 determines whether reselection of a processed node has occurred, that is, whether a node of the processing target of instruction is duplicated, before all of the instructions included in the incompatibility information have been completely executed. When reselection of node has occurred, the processing proceeds to step S144, and when reselection of node has not occurred, the processing proceeds to step S145.

(S144) The test unit 125 outputs a duplication error indicating an instruction in which reselection of node has occurred. For example, the test unit 125 transmits the duplication error to the terminal device 31.

(S145) The test unit 125 applies the incompatibility information to the source code acquired together with the incompatibility information, and generates the source code after conversion.

(S146) The test unit 125 executes the source code after conversion generated in step S145 in the test database, and extracts an execution result from the test database. For example, the test unit 125 transmits the SQL statement included in the source code after conversion to the test database. Furthermore, for example, the test unit 125 executes the SQL procedure code included in the source code after conversion in the test database.

(S147) The test unit 125 determines whether a correct execution result is stored together with the incompatibility information and the source code. When the correct execution result is stored, the processing proceeds to step S148, and when not stored, the processing proceeds to step S150.

(S148) The test unit 125 determines whether the execution result of testing in step S146 agrees with the correct execution result. When the execution result of testing agrees with the correct execution result, the test unit 125 determines that the incompatibility information is operating normally and ends the incompatibility information testing. When they do not agree, the processing proceeds to step S149.

(S149) The test unit 125 outputs a test error indicating that the incompatibility information does not operate normally. For example, the test unit 125 transmits the test error to the terminal device 31. Then, the incompatibility information testing ends.

(S150) The test unit 125 outputs the execution result of testing in step S146, and requests confirmation of whether or not the execution result of testing is correct. For example, the test unit 125 transmits the execution result of testing to the terminal device 31.

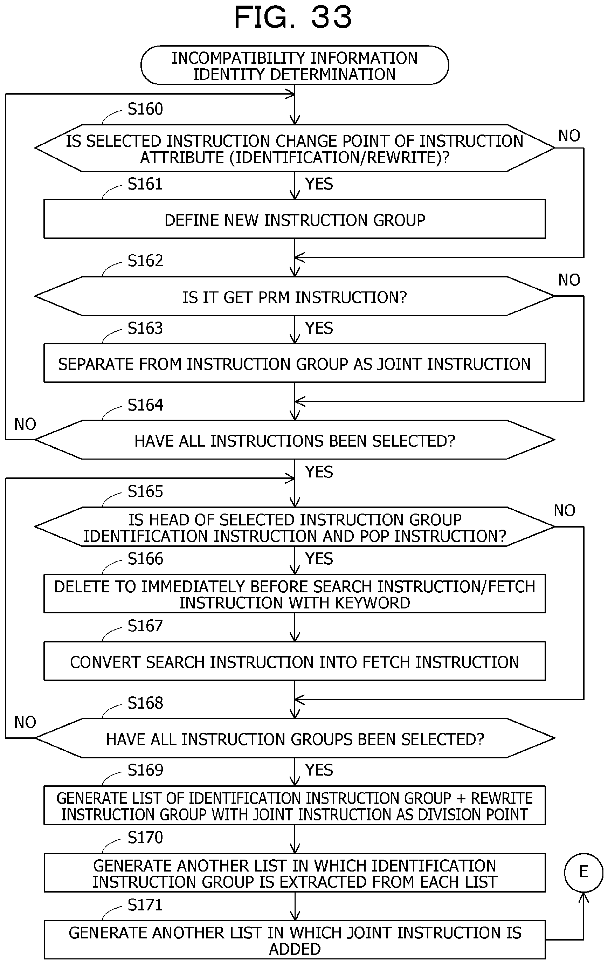

FIG. 33 is a flowchart illustrating a procedure example of incompatibility information identity determination.

(S160) The identity determination unit 126 selects, preferentially from the head, one instruction included in incompatibility information. The identity determination unit 126 determines whether the selected instruction is a change point of instruction attribute. The case where the selected instruction is a change point includes a case where the selected instruction is the instruction at the head of the incompatibility information, a case where the previous instruction is an identification instruction and the current instruction is a rewrite instruction, and a case where the previous instruction is a rewrite instruction and the current instruction is an identification instruction. When it is a change point, the processing proceeds to step S161, and when it is not a change point, the processing proceeds to step S162.

(S161) The identity determination unit 126 defines a new instruction group. The instruction to be selected is distributed to this instruction group until another instruction group is defined.

(S162) The identity determination unit 126 determines whether the selected instruction is a GET PRM instruction. When the selected instruction is a GET PRM instruction, the processing proceeds to step S163, and when the selected instruction is not a GET PRM instruction, the processing proceeds to step S164.

(S163) The identity determination unit 126 separates the instruction from the instruction group as a JOINT instruction.

(S164) The identity determination unit 126 determines whether all of the instructions included in the incompatibility information have been selected in step S160. When all of the instructions have been selected, the processing proceeds to step S165, and when there is an unselected instruction, the processing returns to step S160.

(S165) The identity determination unit 126 selects any one instruction group from among the instruction groups generated in steps S160 to S164. The identity determination unit 126 determines whether the head of the selected instruction group is an identification instruction and a POP instruction. When the head is an identification instruction and a POP instruction, the processing proceeds to step S166, and in other cases, the processing proceeds to step S168.

(S166) The identity determination unit 126 deletes the POP instruction at the head of the selected instruction group to an instruction immediately before a SEARCH instruction with a keyword or a FETCH instruction with a keyword.

(S167) When the head of the instructions remaining without being deleted is a SEARCH instruction, the identity determination unit 126 converts the SEARCH instruction into a FETCH instruction.

(S168) The identity determination unit 126 determines whether all of the generated instruction groups have been selected in step S165. When all of the instruction groups have been selected, the processing proceeds to step S169, and when there is an unselected instruction group, the processing returns to step S165.

(S169) The identity determination unit 126 generates a list including an identification instruction group and a rewrite instruction group that are consecutive, with the JOINT instruction included in the incompatibility information as a division point. For example, it is assumed that identification instruction group #1, rewrite instruction group #1, the JOINT instruction, identification instruction group #2, and rewrite instruction group #2 are generated from the incompatibility information. In this case, the list of identification instruction group #1 + rewrite instruction group #1 and the list of identification instruction group #2 + rewrite instruction group #2 are generated.

(S170) The identity determination unit 126 extracts the identification instruction group at the head from each list generated in step S169, and generates another list. For example, the list of only identification instruction group #1 is generated from the list of identification instruction group #1 + rewrite instruction group #1, and the list of only identification instruction group #2 is generated from the list of identification instruction group #2 + rewrite instruction group #2.

(S171) The identity determination unit 126 adds the JOINT instruction to the lists generated in steps S169 and S170, and generates another list. Generation of another list includes connecting two lists by using the JOINT instruction. However, generation of another list is performed within a range in which the appearance order of instructions is consistent with the incompatibility information. For example, the list of identification instruction group #1 + JOINT instruction and the list of identification instruction group #1 + rewrite instruction group #1 + JOINT instruction are generated. Furthermore, the list of identification instruction group #1 + JOINT instruction + identification instruction group #2 and the list of identification instruction group #1 + rewrite instruction group #1 + JOINT instruction + identification instruction group #2 + rewrite instruction group #2 are generated. Each list generated in steps S169 to S171 is regarded as incompatibility sub-information.

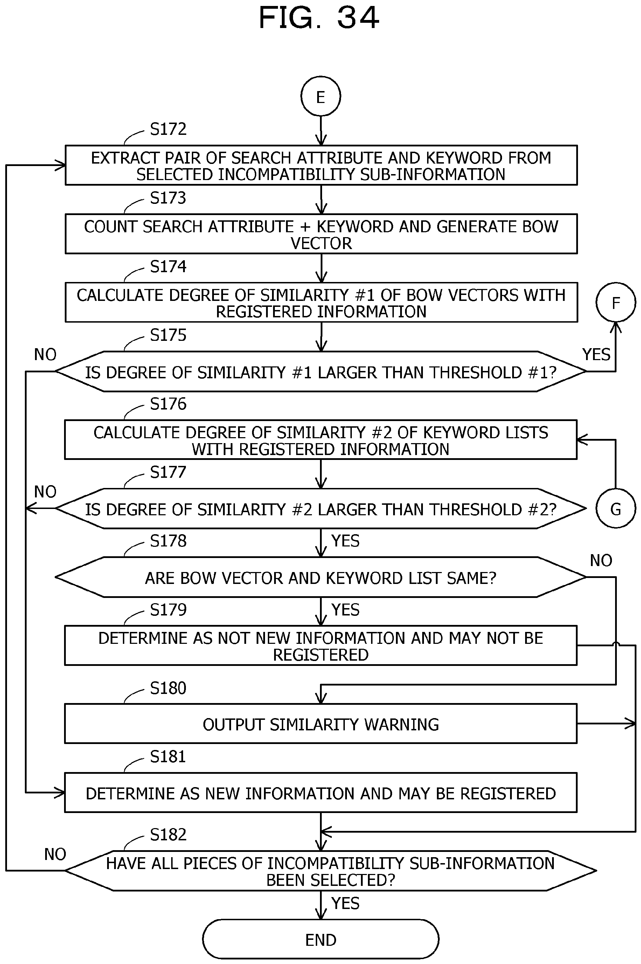

FIG. 34 is a flowchart illustrating the procedure example of incompatibility information identity determination (continued 1).

(S172) The identity determination unit 126 selects one piece of incompatibility sub-information. The identity determination unit 126 extracts a pair of a search attribute and a keyword from the selected incompatibility sub-information.

(S173) The identity determination unit 126 counts the number of times of appearance for each search attribute + keyword, and generates a BOW vector in which the numbers of times of appearance or appearance probabilities are enumerated.

(S174) The identity determination unit 126 calculates the degree of similarity of BOW vectors (degree of similarity #1) with registered incompatibility information or incompatibility sub-information (registered information). The BOW vector of registered information may be saved in the incompatibility information storage unit 122 or may be generated here. For example, degree of similarity #1 is cosine similarity.

(S175) The identity determination unit 126 determines whether degree of similarity #1 calculated in step S174 is larger than threshold #1. When degree of similarity #1 is larger than threshold #1, the processing proceeds to step S183, and when the degree of similarity #1 is equal to or smaller than threshold #1, the processing proceeds to step S181. Note that, in a case where there is a plurality of pieces of registered information, the processing proceeds to step S183 when degree of similarity #1 of at least one piece of registered information is larger than threshold #1.

(S176) The identity determination unit 126 calculates the degree of similarity of keyword lists generated in steps S183 to S194 described later (degree of similarity #2) with registered information. The keyword list of registered information may be saved in the incompatibility information storage unit 122 or may be generated here. In the case where there is a plurality of pieces of registered information, registered information for which degree of similarity #2 is calculated is limited to that for which degree of similarity #1 is larger than threshold #1.

(S177) The identity determination unit 126 determines whether degree of similarity #2 calculated in step S176 is larger than threshold #2. When degree of similarity #2 is larger than threshold #2, the processing proceeds to step S178, and when degree of similarity #2 is equal to or smaller than threshold #2, the processing proceeds to step S181. Note that, in the case where there is a plurality of pieces of registered information, the processing proceeds to step S178 when degree of similarity #2 of at least one piece of registered information is larger than threshold #2.

(S178) The identity determination unit 126 determines whether there is registered information having the same BOW vector and the same keyword list. When the corresponding registered information exists, the processing proceeds to step S179, and when it does not exist, the processing proceeds to step S180.

(S179) The identity determination unit 126 determines that the selected incompatibility sub-information is not new information and may not be registered. Then, the processing proceeds to step S182.

(S180) The identity determination unit 126 outputs a similarity warning indicating that similar registered information exists. Similar registered information is registered information for which degree of similarity #2 is larger than threshold #2. For example, the identity determination unit 126 transmits the similarity warning to the terminal devices 31 and 32. Then, the processing proceeds to step S182.

(S181) The identity determination unit 126 determines that the selected incompatibility sub-information is new information and may be registered subject to the success of automatic testing and the approval of the approver.

(S182) The identity determination unit 126 determines whether all of the pieces of incompatibility sub-information have been selected in step S172. When all of the pieces of incompatibility sub-information have been selected, the incompatibility information identity determination ends, and when there is an unselected piece of incompatibility sub-information, the processing returns to step S172. Note that, when all of the pieces of incompatibility sub-information included in the incompatibility information are determined to be new information, registration of the incompatibility information is permitted and registration of each piece of incompatibility sub-information may be permitted. Furthermore, when only some pieces of incompatibility sub-information included in the incompatibility information are determined to be new information, registration of the pieces of incompatibility sub-information determined to be new information may be permitted.

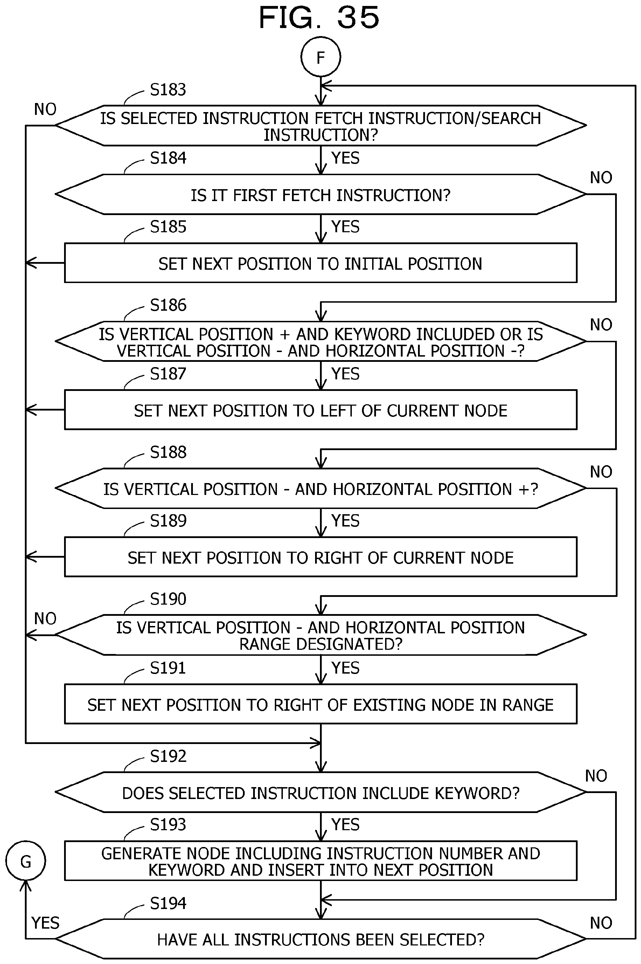

FIG. 35 is a flowchart illustrating the procedure example of incompatibility information identity determination (continued 2).

(S183) The identity determination unit 126 selects, preferentially from the head, one instruction included in incompatibility sub-information. The identity determination unit 126 determines whether the selected instruction is a FETCH instruction or a SEARCH instruction. When the selected instruction is a FETCH instruction or a SEARCH instruction, the processing proceeds to step S184, and in other cases, the processing proceeds to step S192.

(S184) The identity determination unit 126 determines whether the selected instruction is the first FETCH instruction included in the incompatibility sub-information. When it is the first FETCH instruction, the processing proceeds to step S185, and when it is not the first FETCH instruction, the processing proceeds to step S186.

(S185) The identity determination unit 126 sets the next position in the keyword list at which the next node is inserted as the initial position. Then, the processing proceeds to step S192.

(S186) The identity determination unit 126 determines whether the selected instruction is an instruction with vertical position + and a keyword or an instruction with vertical position - and horizontal position -. When it is an instruction satisfying the above condition, the processing proceeds to step S187, and in other cases, the processing proceeds to step S188.

(S187) The identity determination unit 126 sets the next position in the keyword list to the left of the current node. The current node is an existing node of current interest, and is usually a node added last to the keyword list. Then, the processing proceeds to step S192.

(S188) The identity determination unit 126 determines whether the selected instruction is an instruction with vertical position - and horizontal position +. When it is an instruction satisfying the above condition, the processing proceeds to step S189, and in other cases, the processing proceeds to step S190.

(S189) The identity determination unit 126 sets the next position in the keyword list to the right of the current node. Then, the processing proceeds to step S192.

(S190) The identity determination unit 126 determines whether the selected instruction is an instruction with vertical position - and horizontal position range designated. When it is an instruction satisfying the above condition, the processing proceeds to step S191, and in other cases, the processing proceeds to step S192.

(S191) The identity determination unit 126 sets the next position in the keyword list to the right of the existing node that is in the range of the horizontal position of the selected instruction.

(S192) The identity determination unit 126 determines whether the selected instruction includes a keyword. When the selected instruction includes a keyword, the processing proceeds to step S193, and when the selected instruction does not include a keyword, the processing proceeds to step S194.

(S193) The identity determination unit 126 generates a node including the instruction number and keyword of the selected instruction, and inserts the node into the next position set in steps S183 to S191.

(S194) The identity determination unit 126 determines whether all of the instructions included in the incompatibility sub-information have been selected in step S183. When all of the instructions have been selected, the processing proceeds to step S176, and when there is an unselected instruction, the processing returns to step S183.

As described above, the information processing system of the second embodiment accumulates, as knowledge information, incompatibility information that defines a procedure of incompatibility absorption for the source code using a database product. By using the accumulated incompatibility information, the information processing system may automate a part or all of the incompatibility absorption of source code, and may streamline the incompatibility absorption.

Furthermore, the information processing system provides a creator who creates incompatibility information with an editor that supports creation of incompatibility information. The editor displays a syntax tree of a sample of the source code, and automatically generates incompatibility information based on user operation for the syntax tree. Therefore, the burden of creating reusable incompatibility information is reduced.

Furthermore, before incompatibility information is registered in a knowledge database, the information processing system executes automatic testing of confirming that the incompatibility information operates normally. Therefore, the quality of the accumulated incompatibility information is improved. Furthermore, before incompatibility information is registered in the knowledge database, the information processing system determines whether substantially the same incompatibility information that may detect the same incompatible portion already exists. Therefore, duplicate registration of substantially the same incompatibility information in the knowledge database is suppressed, and searching and management of incompatibility information are streamlined. Furthermore, a use result of each piece of incompatibility information is appropriately counted, and the evaluation of each piece of incompatibility information is optimized.

Furthermore, the information processing system uses a BOW vector indicating the appearance frequency of a pair of a search attribute and a keyword and narrows down similar pieces of existing incompatibility information, and uses a keyword list indicating the appearance order of keywords and finally determines whether substantially the same existing incompatibility information exists. Therefore, even in a case where the descriptions of two pieces of incompatibility information are different since the search orders of keywords are different, substantial identity that enables detection of the same incompatible portion is determined.

Furthermore, since the appearance order of keywords is taken into consideration, the determination accuracy is improved, and the risk that the pieces of incompatibility information that detects different incompatible portions are erroneously determined to be substantially the same is reduced. Furthermore, the information processing system evaluates substantial identity by the appearance order of keywords after narrowing down the pieces of existing incompatibility information by a BOW vector that does not take the appearance order of keywords into consideration. Therefore, identity determination is efficiently executed.

The above description merely illustrates the principle of the present disclosure. Further, a large number of modifications and changes are possible for those skilled in the art. The present disclosure is not limited to the accurate configuration and application examples illustrated and described above. All corresponding modification examples and equivalents are regarded as being within the scope of the present disclosure by the appended claims and their equivalents.

### Reference Signs List

10 information processing device
11 storage unit
12 processing unit
13, 14 incompatibility information
15, 16 frequency information
17, 18 order information

## Claims

1. An information processing program that causes a computer to execute a process comprising:
acquiring first incompatibility information, which is information for searching for a description incompatible with second software from source code that uses first software and indicates a condition for a keyword of two or more language elements and a positional relationship between the two or more language elements;
extracting two or more keywords from the first incompatibility information, generating first frequency information based on appearance frequency of a same keyword, and generating first order information that indicates an appearance order of the two or more keywords estimated from a condition of the positional relationship; and
based on a first degree of similarity between the first frequency information and second frequency information corresponding to second incompatibility information and a second degree of similarity between the first order information and second order information corresponding to the second incompatibility information, determining identity between the first incompatibility information and the second incompatibility information.

2. The information processing program according to claim 1, wherein
the first incompatibility information further indicates a condition for an attribute of the two or more language elements, and
in the generating of first frequency information, two or more pairs of the keyword and the attribute are extracted and the first frequency information is generated so as to indicate appearance frequency of a same pair.

3. The information processing program according to claim 1, wherein
the first incompatibility information defines a search range when a second language element is searched for from a first language element in a syntax tree as a condition for the positional relationship, and
in the generating of first order information, the appearance order is estimated based on the search range.

4. The information processing program according to claim 1, wherein
in the determining of identity, the first degree of similarity is compared with a first threshold, and when the first degree of similarity exceeds the first threshold, the second degree of similarity is compared with a second threshold.

5. The information processing program according to claim 1, wherein
the computer is further caused to execute a process of, in a case where the first incompatibility information defines a first search of searching for a second language element from a first language element and a second search of searching for a third language element from the first language element or the second language element, dividing the first incompatibility information into first incompatibility sub-information that indicates the first search and second incompatibility sub-information that indicates the second search, and
the generating of first frequency information, the generating of first order information, and the determining of identity are executed for each of the first incompatibility sub-information and the second incompatibility sub-information.

6. An information processing method comprising:
acquiring first incompatibility information, which is information for searching for a description incompatible with second software from source code that uses first software and indicates a condition for a keyword of two or more language elements and a positional relationship between the two or more language elements;
extracting two or more keywords from the first incompatibility information, generating first frequency information based on appearance frequency of a same keyword, and generating first order information that indicates an appearance order of the two or more keywords estimated from a condition of the positional relationship; and
based on a first degree of similarity between the first frequency information and second frequency information corresponding to second incompatibility information and a second degree of similarity between the first order information and second order information corresponding to the second incompatibility information, determining identity between the first incompatibility information and the second incompatibility information.

7. An information processing program device comprising:
a storage unit configured to acquire first incompatibility information, which is information for searching for a description incompatible with second software from source code that uses first software and indicates a condition for a keyword of two or more language elements and a positional relationship between the two or more language elements;
a processing unit configured to extract two or more keywords from the first incompatibility information, generate first frequency information based on appearance frequency of a same keyword, generate first order information that indicates an appearance order of the two or more keywords estimated from a condition of the positional relationship, and based on a first degree of similarity between the first frequency information and second frequency information corresponding to second incompatibility information and a second degree of similarity between the first order information and second order information corresponding to the second incompatibility information, determine identity between the first incompatibility information and the second incompatibility information.
